# EUROPEAN PATENT APPLICATION

(11) **EP 1 724 075 A2**
(43) Date of publication of application: **22.11.2006**
(21) Application number: 05384036.9
(22) Date of filing: 10.10.2005
(51) Int. Cl.: B26D 5/00, B26D 7/01, B26D 7/06, B26D 7/26

(54) **Automatic system and procedure for handling and treatment of natural cork slabs**

(30) Priority: 08.10.2004 ES 200402410; 08.10.2004 ES 200402411; 08.10.2004 ES 200402412; 08.10.2004 ES 200402413
(71) Applicant: Godoy Varo, José Luis, 17244 Cassa de la Selva (Girona) (ES)
(72) Inventor: Godoy Varo, José Luis, 17244 Cassa de la Selva (Girona) (ES)
(74) Representative: Torner Lasalle, Elisabet

(57) **Abstract**

The device includes a management and control device, which includes exploration means (103) to capture an irregular cork slab (P) within an exploration area (1) and to generate data representative of exploration parameters that include at least the contour of said slab (P), together with its position and orientation on said exploration area (1). Electronic means (18) being provided to process said data representative of the exploration parameters together with other additional parameters held in memory and/or entered by an operator, to determine processing parameters judged to be optimum for maximum yield from the slab (P), and to generate control commands to govern said automatic handling and processing apparatus in accordance with said processing parameters. The device implements an appropriate procedure.

## Description

### Field of the invention

In general, this invention concerns a system and procedure for the handling and processing of natural cork slabs by means of an automatic apparatus, particularly applicable to the handling and processing of natural unprocessed cork slabs in irregular shapes, sizes, contours, relieves and/or textures. More specifically, this invention concerns an automatic handling and processing apparatus, together with a management and control device for determining certain processing parameters, which include at least orientation, position, and the number of cuts to made in a flattened slab, from certain exploration parameters in relation to each of said slabs previously acquired by a capture device and to govern said apparatus using the processing parameters.

### Previous state of the art

The manufacturing process for natural corks includes a step that comprises cutting slices having a uniform width from rough natural cork slabs which, just as they are obtained from the tree, have irregular shapes, sizes, thickness and contours. The corks are subsequently cut from said slices, so that the cork height is determined by the slice width.

Patent ES-A-2077515 concerns a procedure and installation for the production of corks.

Patent DE-A-3517714 makes known a procedure for automatically cutting pieces of wood.

It is also known how to carry out operations of cutting rough natural cork slabs in irregular shapes, sizes, contours, relieves and/or textures using motorised cutting apparatus, together with a procedure that involves manual manipulating of the objects or slabs in relation to the cutting apparatus.

In the cork manufacturing industry, cork slab slicing machines have been known for some time, which basically comprise a support surface that supports part of the slab to be cut, together with a cutting device that operationally arranged with respect to said support surface. The mentioned cutting device is usually in the form of a cutting disc, such as a blade, or circular saw rotated by a motor. An operator manually grips the cork slab and moves over the support surface, first in one forward direction with respect to the disc cutting edge until it comes into contact with guiding stop means set at a certain distance form the cutting device, which determines the slice width, and then in a cutting direction applying pressure to the slab along the guiding stop means and against the cutting disc until a slice is completed. Then, the operator removes the slab from the exit side of the cutting organ and repeats the described operations in front of the cutting device in order to produce the next slice. This is hard work and can involve danger to the operator because of the relatively large size and heavy weight of the cork slabs and their handling in relation to the cutting device.

With respect to management and control, the operator takes each successive irregular slab to be cut and uses experience to decide on the position and orientation of a first cut intended to reject a first irregular front edge of the slab in order to produce a first straight edge that is supported against said stop as a reference for making a second cut parallel to the first which, in turn, will provide a new straight edge that is used as the reference for another cut parallel to the second and so on, successively in order to obtain successive slices from said cork slab. Although in general, slices of different thickness are required to manufacture corks or cork discs of different heights, the stop position is normally adjusted to a fixed width for a complete production run of cork slabs in order to minimise time lost in position changes. On reaching the end of the slab, the last cut leaves a portion next to the second irregular rear edge that has insufficient width to form a slice, but which usually of a width that involves a significant loss.

Another type of cutting apparatus in known to the cork manufacturing industry in which the motorised cutting disc moves in relation to the support surface and a pressure bar is driven vertically to apply pressure and hold the cork slab against the support surface. An operator pedal activates pressure bar action and cutting disc movement and an adjustable stop is fixed in a predetermined position for an entire set of slabs. Here also, the operator employs experience to manually place the cork slab on the support surface in a suitable position for the first cut that serves as reference for the successive cuts, although the apparatus includes an indicator device, which assists be projecting a light line or bar, for example, a laser, onto the cork slab to indicate where the operator should make the cut.

One inconvenience of said apparatus, apart from the hard work and danger involved for the operator, is that, even assuming that the first cut is made in a suitable position in accordance with the contour and slab grain direction, it is highly probable that after the last cut there remains a piece that is too narrow for a slice, in spite of still being significantly wide.

There is, therefore, a need for an automatic system for the handling and processing of rough natural cork slabs using one or more handling devices that perform several functions. There is also a need to automate the handling and processing apparatus for flat, irregular objects in order to eliminate or substantially reduce risks to the operator and, at the same time, rationalise the cut distribution in order to optimise the yield of said objects. However, given the fact that there are no two irregular objects or slabs that are identical, one problem to be solved in automating the handling and processing operations, is that of determining the position, orientation and number of operations to be performed on a particular object so that the cited automation involves having a management and control device that permits an individual analysis of each slab in order to determine at least the position, orientation and number of cuts to be applied to the same for optimum yield.

There is also a need to provide each of the mentioned devices with an automatic gripping device to hold one of the irregular flattened objects, retain it and then release it in a controlled fashion.

Since, for optimum slab material yield, the management and control device may determine different widths for successive slices, there is a requirement for guiding stop means in relation to the cutting device fitted the means of movement controlled by the management and control device to vary its position in accordance with the slice width determined for each cut according to the cut parameters.

There is also the need for a guide stop device and procedure that is capable of automatically and alternatively positioning guiding stop means on the changing advance side of a dual rotation direction cutting disc.

### Disclosure of the invention

This invention contributes to satisfying the previous and other needs by providing a handling and processing system for rough natural cork slabs having irregular shapes, sizes, contours, relieves and/or textures, by means of an automatic apparatus. The system includes a management and control device for said automatic apparatus, characterised in that it includes exploration means in order to capture an irregular flattened object and generate data representative of certain exploration parameters that include at least the contour of said object; a management and control device adapted to process said data representative of said exploration parameters in order to determine certain processing parameters that include at least the orientation and/or position of at least one operation to be performed on the object, which is judged optimum with respect to obtaining maximum yield from the object. The mentioned management and control device is adapted to generate certain control commands from said processing parameters, which are directly supplied to govern said automatic apparatus. Alternatively, the management and control device is adapted to store the exploration parameters and/or the processing parameters in a memory in order to be subsequently recovered and used to generate the mentioned control commands to govern the automatic apparatus in accordance with said processing parameters.

In an exemplary embodiment, the operations to be carried out on the flattened object include a series of cuts. In this case, the processing parameters include the position and orientation of a first cut intended to reject a first irregular edge of the object and the position, the orientation and number of successive cuts to be performed on the irregular flattened object, taking the position and orientation of said first cut as reference. When the aim is to obtain slices from an irregular flattened object, all the cuts are parallel and the first cut provides a first straight edge that is used as reference for the orientation of the following cuts.

The position and orientation of the first cut is determined taking into account, for example, the direction of the material grain, if any is present, or the dimension that permits greatest slice length, in addition to the possibility of achieving minimum material losses in said first irregular edge of rejection and the possibility of subsequent optimum yield. For example, in the slicing of cork slabs for the manufacture of corks is carried out transversally to the ruggedness of the slab so that subsequent cutting is perpendicular to the grain, whereas the manufacture of discs is carried out in the direction of the maximum dimension. Since it is necessary to have slices of different predetermined widths in order to manufacture corks having different height, the number and position of the successive cuts will be determined taking into account the best possible combination of slices of the various predetermined widths in order to also achieve the minimum loss of material in a last irregular reject edge.

In accordance with an exemplary embodiment, the position and orientation of said first cut used as reference is manually determined in relation to the object based on operator experience. For this reason, the device comprises the indication means adapted to generate data representative of at least one mark associated with the object, with said mark indicative of the position or orientation of the first cut to be made in the object. When said indication means show the mark in the desired position, the mentioned data are introduced, for example, by pressing a button, into the mentioned management and control device, which are adapted to process the data representative of the exploration parameters, together with said additional parameters and said data representative of the cited at least one mark in order to determine the other processing parameters as the result.

Eventually, using the indication means, the operator can enter a second mark indicating the position of the last cut to be made to the object, and even one or more intermediate marks indicating various areas of the cork slab considered more adequate for obtaining the slices of the various predetermined widths.

The mentioned indication means could comprise a tracer connected to the management and control device to trace a mark in the form of, for example, a line of light directly onto the object, position-detection means, such as a linear encoder to detect the tracer position and a device to enter the data corresponding to the position of said mark into the management and control device. Alternatively, the indication means could comprise a peripheral device, such as a mouse, connected to the management and control device to enter said mark virtually onto an image of the object captured by the exploration means, such as a monitor screen connected to said management and control device.

In accordance with an alternative exemplary embodiment, the management and control device determines the position and orientation of the first cut to be performed on the object from an analysis of the exploration parameters by means of a specific application stored in memory and without operator intervention. To this end, when dealing with, for example, natural cork slabs, the capture parameters may also include for example, the direction of the cork bark ruggedness and the cited software application may include comparison routine of the capture parameters with the parameters stored in a memory in order to determine the position and orientation of the first cut. This position and orientation of the first cut is then used by the management and control device as a reference from which the other processing parameters are determined.

When the exploration and processing parameters are held in memory, the device of this invention includes a recognition area for the previously explored objects or cork slabs, where these are going to be surveyed and subsequently collected. In this case, the device also comprises means of surveying associated with said recognition area and connected to the management and control device in order to individually recognise the object set out in a random position over said recognition area from the exploration parameters previously stored in memory. The mentioned automatic handling and processing apparatus has handling means governed by the management and control device adapted to grip the object once it has been surveyed from said recognition area, to orient it, transfer it and move it in relation to a processing organ in accordance with the previously determined processing parameters and recovered from memory.

However, the recognition operation may be omitted if the processing parameters are directly supplied to the processing apparatus and if the apparatus' handling means are arranged to take the object directly from the exploration area.

In accordance with another exemplary embodiment, the device is applied to a disc cutting or perforating apparatus from a thin slab of natural cork. In this case, the exploration means are also adapted to detect possible defects or blemishes in the cork slab. Then the cutting parameters include the cutting coordinates for a first disc and the cutting coordinates for subsequent discs in relation to the first and in function of possible defects detected in the material.

This invention also provides a management and control procedure for the automatic handling and processing apparatus applicable to rough natural cork slabs in irregular shapes, sizes, contours, relieves and/or textures that can be implemented by means of the above described device.

The procedure includes several steps. First, the irregular flattened object is explored to obtain exploration parameters that are characteristic of said specific object. These exploration parameters include at least the size and the contour of said object. Then, processing parameters, judged to be optimum in order to obtain better yield from the object, are determined from said exploration parameters and with the intervention of the management and control device. These processing parameters include the position and orientation of a first operation to be carried out on said object and the position and orientation of successive operations to perform on said object with reference to said position and orientation of the first operation. Then, to govern said automatic handling and processing device by means of commands produced by said management and control device in order to automatically carry out said first and successive operations on the object.

The mentioned step for obtaining the exploration parameters comprise capturing the object using some exploration means in accordance with the description given above to generate representative data from said exploration parameters, which include at least the size and contour of the object, together with its position and orientation in relation to said exploration area. Preferably, once the objects have been surveyed by the exploration means on the exploration area, they are randomly deposited in means of temporary storage and the corresponding data are stored in memory. Subsequently, when considered opportune, the objects are transferred from said means of temporary storage to a recognition area, on which they are individually and randomly deposited. The mentioned recognition means are capable of acquiring, by means of an electronic camera or scanner, an image of the object left in a random position on the recognition area and of sending the acquired data to the management and control device where they are compared with the stored exploration data until they are paired with the data corresponding to a specific previously explored object. Then, once the object on the recognition area has been identified, the management and control device will govern the handling and processing device in accordance with the corresponding processing parameters.

Alternatively, it is possible to dispense with the recognition step if the exploration area, on which the exploration step is executed is also used as the recognition area, from which the explored object can be taken by handling means and processing based on coordinates determined in the exploration parameters.

Just as described above, in an exemplary embodiment the operations to be performed on the object include a series of cuts, in which case the processing parameters include the orientation of the first cut, a distribution of the positions of subsequent parallel cuts in accordance with one or more predetermined slice widths and the moment in time to perform a half revolution. Thus, the mentioned handling means move the object and disturb said cutting device in order to perform the first cut in order to reject a first irregular edge of the object and subsequent cuts parallel to said first cut in order to obtain successive slices. At a moment determined by the processing parameters, the handling means rotate the object through one half turn and move it again disturbing the cutting device in order to perform at least the final cut parallel to the first cut in order to reject a second irregular edge of the object, opposite the first and obtain a final slice.

It should be pointed out here that when referring to the "last slice" it is understood that this is the cut located in a position furthest away from the first with respect to the slab, although it is not necessarily the last cut with regards to time.

The system of this invention includes an automatic apparatus for handling and cutting applicable to rough natural cork slabs in irregular shapes, sizes and contours, of the type consisting of at least one support surface; at least one cutting device operationally arranged with respect to said support surface; some automatic means of intermittently immobilising the slab with respect to the support surface; and some automatic means of moving the cut in order to carry out movements in relation to disturbance between the slab of the cutting device in at least one cutting direction. The apparatus is characterised in that it also includes some automatic means of advance movement to perform movements of said object in a forward direction, or in the opposite direction; together with some automatic rotating means to rotate the slab with respect to the support surface without disturbing the cutting device between two consecutive cutting operations.

Preferably, the apparatus includes one or more handling devices, each fitted with a gripping assembly by punching to hold and retain said object, together with the means of releasing said previously held object.

The apparatus in the system of this invention includes a variable guide stop device for slicing the rough natural cork slabs. The stop device is characterised in that the guiding stop means are mounted on a mobile support coupled in a moveable fashion to a support structure, with driving means arranged to move said moving support under commands from a management and control device in order to vary the position of the guiding stop means in relation to the cutting device in accordance with some desired variable widths for successive slices in the same slab.

### Brief description of the drawings

The previous and other characteristics and advantages of this invention will be more fully understood from the following detailed description of exemplary embodiments, with reference to the attached drawings, in which:
Fig. 1 is a perspective view that illustrates the exploration means associated with the exploration area and connected to the management and control device in accordance with an exemplary embodiment of the device of this example;
Fig. 2 is a plan view of an automatic handling and processing device applicable to rough natural cork slabs in irregular shapes, sizes, contours, relieves and/or textures, which includes a recognition area that is associated with means of surveying in accordance with the exemplary embodiment of Fig. 1;
Figs. 3A to 3F are diagrammatic views of the various steps followed by the procedure of this invention for the handling and processing of a natural cork slab;
Fig. 4 is a perspective view that illustrates another exemplary embodiment of the device of this invention associated with an automatic handling and processing apparatus for flattened objects where the exploration area is adjacent to the processing area, with the recognition operations omitted;
Fig. 5 is a perspective view that illustrates another exemplary embodiment of the automatic handling and processing apparatus for flattened objects that can be governed by the device of this invention;
Fig. 6 is a plan view of a handling and cutting device in accordance with an exemplary embodiment of the invention:
Figs. 7A and 7B are diagrammatic front elevation views that illustrate the operation of the automatic immobilising means;
Fig. 8 is a transverse section view that illustrates the operation of the automatic means of advance movement and of the automatic immobilising means during the slice cutting operation;
Fig. 9 is a front elevation view that illustrates the operation of a carrier mechanism for cutting pieces intended to reduce the wear of the cutting device;
Fig. 10 is a plan view of a handling and cutting device in accordance with another exemplary embodiment of the invention;
Fig. 11 is a perspective view of the apparatus of the invention with conveying means and classification; and
Fig. 12 is a perspective view of a handling and cutting device in accordance with another exemplary embodiment of the invention, similar to that of Fig. 4;
Fig. 13 is a perspective view of a handling and cutting device in accordance with yet another exemplary embodiment of the invention;
Fig. 14 is a perspective view of a handling and cutting device in accordance with yet one more exemplary embodiment of the invention;
Fig. 15 is a perspective view of a manipulator that forms part of the handling means the apparatus in Figs. 13 and 14;
Figs. 16A and 16B illustrate section elevation views of an exemplary embodiment of a gripping assembly of the device of the invention in a pre-gripping position and a gripping position of a penetrable object, respectively;
Figs. 17A and 17B illustrate section elevation views of another exemplary embodiment of said gripping assembly in a pre-gripping position and a gripping position of a penetrable object, respectively;
Fig. 18 represents a sectioned elevation view of the gripping assembly of Figs. 16A and 16B, incorporating a coupling door to receive a coupling terminal clip of means of moving the gripping assembly;
Figs. 19 and 20 illustrate transversal section views of two other exemplary embodiments of slabs taken through a plane parallel to the outer surface of the same, in accordance with another two exemplary embodiments of the gripping assembly;
Figs. 21A and 21B are lateral transverse section views of the gripping assembly of Fig. 20, operating in the cork slab slicing machine in accordance with two different operating modes;
Figs. 22A and 22B are lateral transverse section views of a gripping assembly fitted with the driving means for a circular movement in a pre-gripping position and a gripping position, respectively;
Fig. 23 is a lower diagrammatic view of the gripping assembly of Figs. 22A and 22B;
Fig. 24 represents a general diagrammatic lateral elevation view, of a cork slab slicing machine fitted with guiding stop means, the object of the invention;
Figs. 25A and 25B illustrate front elevation views of an exemplary embodiment of said guiding stop means in two opposite positions respectively;
Fig. 25C is a plan view that showing details of some second means of adjusting the guiding stop means;
Figures 26A and 26B are front elevation views similar to figs. 25A and 25B, but in accordance with another exemplary embodiment of the guiding stop means in two respective opposite positions;
Fig. 27 is a partial perspective view of a slicer to which is applied another exemplary embodiment of the device of the invention;
Fig. 28 is detail XXVIII of Fig. 27, enlarged;
Fig. 29 is a diagrammatic transverse section view of a part of the slicer shown in Fig. 27, including an enlarged detail; and
Fig. 30 is a partial perspective view of a slicer similar to that shown in Fig. 27 with a support surface variant.

### Detailed descriptions of exemplary embodiments

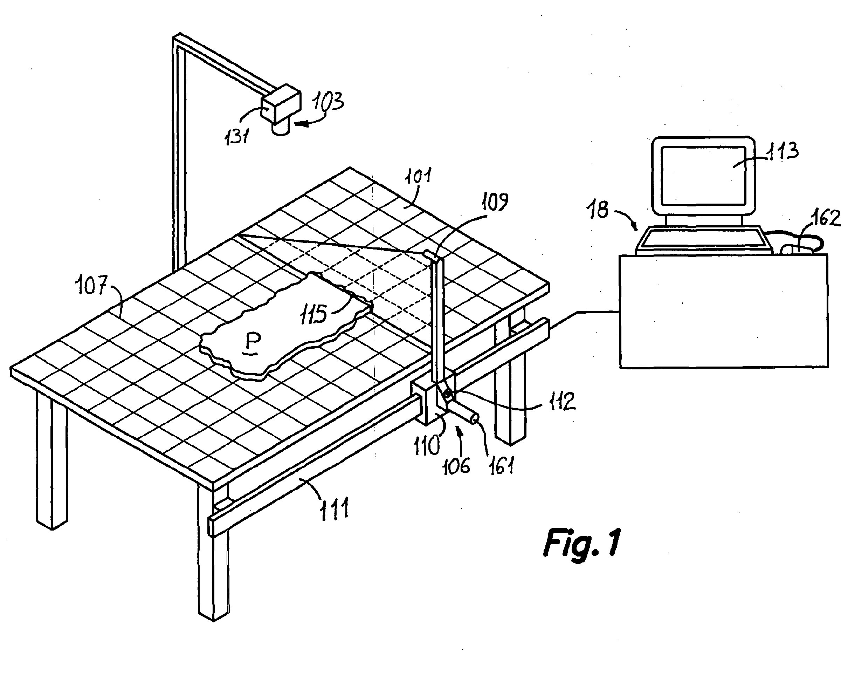

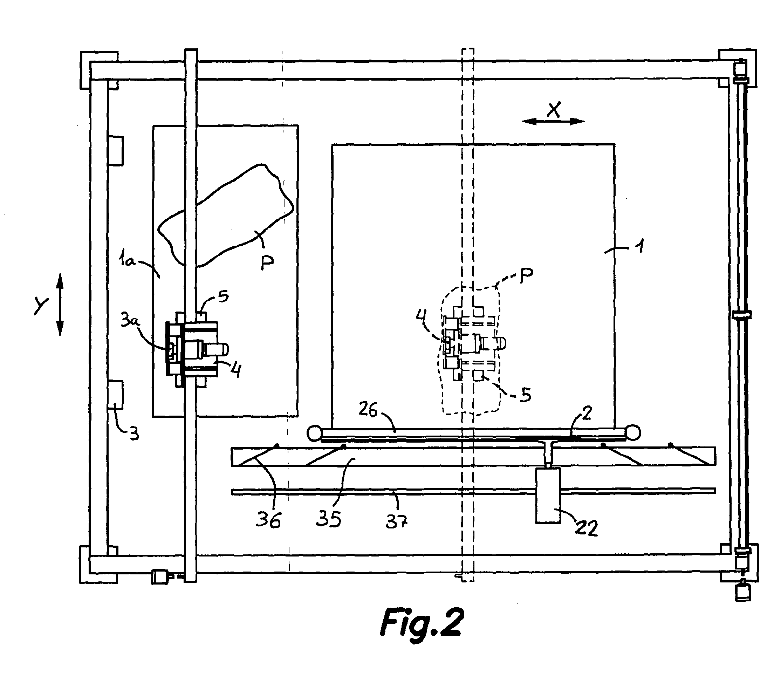

First referring to Fig. 1, this shows an exemplary embodiment of part of a device applicable to the management and control of an automatic handling and control apparatus for rough natural cork slabs P. Fig. 2 shows an exemplary embodiment of said automatic apparatus, which includes another part of the management and control device. This invention's system includes the automatic apparatus as well as the management and control, together with a management and control procedure for the handling and control operations to be performed by the apparatus. In the exemplary embodiment shown in Fig. 2, the processing applied by the apparatus comprises performing a series of transversal cuts to slab P in order to obtain slices of the same, although the apparatus could be dedicated to other processing operations, such as making holes, cutting straight edges, cutting or perforating discs from a thin slab etc.

As can be seen in Fig. 1, the device comprises some exploration means 103, arranged to capture an irregular flattened object, such as a natural cork slab P, positioned in an exploration area which, in this exemplary embodiment, comprises an exploration support surface 101. The exploration means 103 comprise at least one electronic image capture camera 131 arranged to cover the exploration area within is vision field, in other words, the exploration support surface 101, on which the slab P rests. Camera 131 can be of the matrix type and be in a fixed position covering the exploration area or of the linear or vector type and fitted with movement in order to sweep or scan the exploration area.

Camera 131 is capable of generating data representative of certain exploration parameters in relation to slab P, which include at least the contour of said slab P, together with its position and orientation in relation to said exploration support surface 101 taken as the reference plane. The exploration parameters could also include a detailed image of a surface region of object P, to be used as a specific distinguishing mark for object P and as a more detailed "map" for assisting subsequent orientation. This detailed image may be taken by the same camera 131 or by an additional dedicated camera (not shown). Optionally, the exploration support surface 101 could be transparent and camera 131 and said dedicated additional camera could be arranged on opposite sides of the same, for example, camera 131 above in order to produce a direct image and the additional camera below in order to detect a detailed zone by transparency.

The mentioned data are sent to some electronic means 18 adapted to process them, together with some additional parameters held in a memory and/or entered by an operator at exploration time in order to determine processing parameters judged to be optimum for maximum yield from slab P. The mentioned electronic means 18 comprise, for example, a computer, and which are adapted to issue control commands to govern said automatic handling and processing apparatus in accordance with said processing parameters, just as explained below:

In accordance with the illustrated exemplary embodiment, the device also comprises indication means 106, adapted to generate data that is representative of at least one mark 115 associated with the slab P, which indicates the position and orientation of a first cut to be made on the slab P. The cited indication means are connected in order to send said data to the electronic means 18, which use the representative data from said mark 115, together with the exploration parameter representative data and the mentioned additional parameters to determine the processing parameters from their joint processing. These processing parameters include at least the orientation, position and number of cuts to perform preferably across the width of the slab P taking mark 15 as reference.

The means of indicating 106 comprises one or more reference indications 107, such as lines drawn, printed or marked on the exploration support surface 101 in order to assist an operator in the manual positioning of the slab P in a selected orientation on the exploration support surface 101. Alternatively, a linear light trace, preferable a linear laser trace, can be employed as the reference indication 107. In addition, the indication means 106 comprise a tracer 109 adapted to trace the mark 115. This tracer 109 advantageously includes a linear light tracer or laser light tracer on a mobile support 110 adapted to be manually moved in relation to the exploration support surface 101 in order to locate the mark 115 in a desired position on slab P. In the illustrated exemplary embodiment, the tracer 109 is securely mounted on said mobile support 110 so that the mark 115 traced by the tracer 109 is always parallel to said reference indication 107. The mobile support 110 could be driven, for example, by means of a grip 161 along guides 111 located in a fixed position with respect to the exploration support surface 101, together with position-detection means, such as a linear encoder, are arranged to detect the mobile support 110 position in relation to said guides 111 and, consequently, in relation to the exploration support surface 101. The cited position-detection means are connected to the electronic means 18 and associated with a control 112 adapted to enter in the electronic means 18 some parameters representative of the mark 115 position on the slab P when said control 112 is operated.

Preferably, the assembly comprises a display device 113, such as a monitor screen, connected to said electronic means 18 in order to produce a virtual image of slab P and/or display the exploration parameters obtained by the exploration means 103 and/or mark 115 entered by the position-detection means.

With this construction, the tracer 109 operator employs experience to decide on the position and orientation of the mark 115 indicating a first cut intended to reject a first irregular front edge of the slab in order to produce a first straight edge that is supported against said stop as a reference for making a second cut parallel to the first which, in turn, will provide a new straight edge that is used as the reference for another cut parallel to the second and so on, successively in order to obtain successive slices from said cork slab. Additionally, the operator can indicate and enter the data corresponding to a last cut and also indicate and enter data corresponding to intermediate cuts in order to define different areas on the slab P. The software application is responsible for distributing the other cuts in the most suitable fashion for optimum slab usage in accordance with various predetermined slice widths.

A similar result could be obtained by equipping the electronic means 18 with a peripheral device, such as a mouse 162, connected in order to virtually enter said mark 115 on the image of the slab P and/or the exploration parameters obtained by the exploration means 103 and shown on the display device 113.

In accordance with an exemplary embodiment that is not shown, the electronic means 18 use programming and/or database held in memory to perform an analysis of the exploration parameters obtained by the exploration means 103 without operator intervention and determine a reference corresponding to the position and orientation of a first cut to be made on slab P and, from said reference, determine the other processing parameters that include orientation, position and number of cuts to be made on slab P. In this case, the indication means 106 are unnecessary.

In any case, if desired, the data corresponding to the exploration and processing parameters corresponding to each explored slab P can be stored in a digital memory and the explored slabs P can be deposited in a random fashion for an indefinite time in means of temporary storage that are not shown. Alternatively, if so desired, the processing parameters associated with each explored slab P can be directly supplied to the handling and processing apparatus while each slab P is placed at the disposition of manipulation means the apparatus.

Now referring to Fig. 2, this shows a plan view of an automatic handling and processing apparatus for slabs of natural cork P, which is managed and controlled by the device of this invention. There is a recognition area at the entrance to this apparatus that are associated with means of surveying that form part of the management and control apparatus, such as the one described below. In this exemplary embodiment, said recognition area comprises recognition support area 1a.

The mentioned recognition support area 1a is adapted to receive one of the slabs P arranged in a random position on top of the same. For example, an operator or automatic conveyor belt could individually take the explored slabs from the cited means of temporary storage, which could in the form of a trolley or similar, and deposited them on the recognition support surface 1a without taking into account the position in which they are left. The mentioned recognition means are connected to the electronic means 18 to individually recognise and identify each already explored slab P randomly position on the recognition support surface 1a from the exploration parameters held in memory and recover the corresponding processing parameters in order to supply them to the apparatus.

The recognition means include, for example, at least one electronic image-capturing camera 3 arranged to cover the recognition support surface 1a in its field of vision, which would generate data representative of the slab P image. The recognition is performed by comparing these data with the exploration parameters corresponding to the previously explored slabs P that are stored in the memory of the electronic means 18. When the exploration parameters include the mentioned detailed image of a surface region of object P, the recognition means can include an additional camera 3a intended to recognise such detail. Advantageously, this additional camera 3a could be mounted on a manipulator 4 intended to manipulate the slabs P, which will be described later.

When the data representing the image of slab P on the recognition area, in other words, the recognition support surface 1a are paired with the exploration parameters corresponding to a specific previously explored slab, the management and control device recover the process parameters associated with said specific slab, which have been previously determined and stored in a memory. The recognition means also generate data referring to the slab P position and orientation on the recognition support surface 1a. Then, once the specific slab P has been recognised, together with its position and orientation on the recognition support surface 1a, the electronic means 18 then control the handling and processing apparatus in accordance with the corresponding processing parameters, together with the data referring to its current position and orientation.

Just as shown in Fig. 2, the automatic handling and processing apparatus comprises a processing area with handling means governed by the electronic means 18 and adapted to grip the slab P) on the recognition support surface 1a, orientate it, transfer it and perform relative movements between slab P and a cutting device 2 in mutual interference in accordance with the processing parameters. In this exemplary embodiment, the cited processing area comprises processing support surface 1. The mentioned cutting device 2 is driven by a motor 22 and operationally arranged in relation to a processing support surface 1 and, on a side opposite to said processing support surface 1, are installed some mobile stops (not shown) adapted to act as cutting guides and to cooperate in the regulation of the slice width. In the shown exemplary embodiment, the handling means comprise a manipulator 4 carrying a gripping assembly 5 adapted to grip one of said slabs P in a piercing manner and to release the previously gripped slab P. The manipulator 4 is of the type with four shafts and includes driving means arranged to transfer said gripping assembly 5 in the three spatial directions, X, Y and Z, with Z being the direction normal to said recognition support surface 1a, and to rotate the first gripping assembly 5, at least with respect to an shaft Q normal to the recognition support surface 1a.

The manipulator 4 is governed by said electronic means 18 to grip the slab P on the recognition support surface 1a and to transfer it to said processing support surface 1 facing the cutting device 2. If necessary, manipulator 4 also rotates the slab until it is positioned in the orientation with respect to the cutting device 2 that is considered optimum by said electronic means 18. This orientation is parallel to the position and orientation of a first cut to be performed on the slab P, previously determined by mark 115 or by the electronic means 18 during the exploration phase. The cutting device is mounted in a manner that allows it to move along some guides 37 next to an edge of the processing support surface 1. The manipulator 4 is governed by the electronic means 18 to also carry out successive advance movements of the slab P on the recognition support surface 1a alternating with some cutting movements of the cutting device 2 along the guides 37 with interference between the two. These advance movements are equivalent to the widths of the slices to be cut from slab P.

Optionally, the cutting device 2 comprises a saw or disc blade fitted with a cutting disc adapted to cut in both directions of rotation, together with a driving motor connected and controlled to alternatively inert the direction of rotation of said cutting disc in accordance with the successive movements of the cutting disc 2 in interference with the slab P in both directions. Next to the edge of the processing support surface 1, adjacent to the cutting device 2, is a securing bar 26 which is operated to perform up and down movements in order to allow forward movement of the slab P and, alternatively, to trap the slab P against said edge of the processing support surface 1.

It is important to stress that although in the exemplary embodiment shown in Fig. 2, the apparatus comprises a single manipulator 4 with four shafts, the manipulation means could comprise several manipulators, of the same or different types, adapted to transfer the slabs P from one to the others and these various manipulators can serve slabs P from a single recognition area to several processing areas or processing support surfaces for greater productivity.

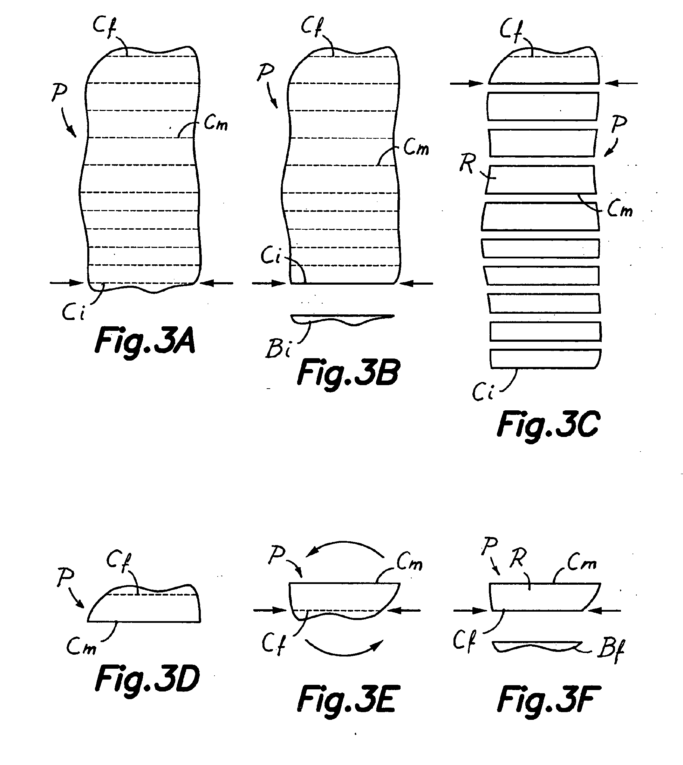

In relation to Figs. 3A to 3F a description is provided below of a cutting operation sequence carried out by the automatic handling and processing apparatus for rough natural cork slabs under commands from the electronic means 18 produced from processing parameters determined by the management and control device of this invention. The arrows indicate the path of the cutting device 2 in relation to the slab P, in other words, the position of the slab P where the cut in each operation has been or will be made.

Fig. 3A shows a flattened object, such as an unprocessed slab of natural cork, with irregular shapes, sizes, contours, relieves and/or textures, which has been previously explored by some exploration means 103 in accordance with the above description and in relation to which certain specific processing parameters have been determined. In accordance with the example shown in Fig. 3A, these processing parameters include the position and orientation of a first cut Ci and a distribution of the positions of subsequent cuts Cm, all of which are parallel to the first cut Ci and which provide successive slices R. The position and orientation of the first cut Ci is in relation to the irregular front edge of the slab P and corresponds to a criterion of maximum usage of the slab material. It can be seen that slices of different widths are shown in the drawing, which have been selected by the management and control device from one or more predetermined slice widths and distributed in order to locate a last cut Cf in an optimum position in relation to the irregular rear edge of the slab P for maximum usage of the slab material. It should be taken into account that the lines corresponding to slices Ci, Cm and Cf are not physically traced on the slab P, but instead corresponds to the processing parameters in the form of electronic data held in the management and control device memory.

Just as described above, the position and orientation of the first cut Ci are determined by the electronic means 18 and eventually by operator intervention via the indication means 106. In some cases, the operator may also mark the desired position for the last cut by the indication means 106 and the software will distribute the subsequent cuts Cm attempting to approach the last cut Cf as much as possible. In some cases, for example, due to thickness differences in various areas of the slab P, the operator may establish some intermediate marks using the indication means 106 in order to indicate certain preferred areas for each slice width and the software will distribute the subsequent cuts Cm attempting to locate, in the best possible manner, each type of cut in its preferred area and approach the last cut Cf as much as possible.

Fig. 3B shows slab P after performing the first cut Ci. This first cut is intended to reject an initial portion, which includes a first irregular edge of the slab, which provides a first straight edge to serve as support against the cutting device stop to act as a reference for a second cut parallel to the first which, in turn, will provide another straight edge to act as reference for another cut parallel to the second and so on successively in order to obtain successive slices R from said cork slab P.

Fig. 3C shows a series of slices R obtained from cutting slab P along the intermediate cutting lines Cm. Driving means move the cutting device stop under the control of the electronic means 18 in accordance with the forward movement of the slab P produced by the manipulator 4 in order to provide each of the successive slices with the indicated width.

Fig. 3D shows what remains of the slab P after a penultimate slice Cm that has produced a straight edge, which cannot be used as reference against the cutting edge stop since the last cut Cf is intended to reject a last portion Bf which is too small to be gripped by the manipulator 4 gripping assembly 5.

For this reason, just as shown in Fig. 3E, the manipulator 4 removes what remains of the slab P from the interference with the cutting device 2 and is turned over by a 180° rotation of the gripping assembly 5 with respect to the cited shaft perpendicular to the processing support surface 1. Then the manipulator 4 replaces what remains of the slab P in the interference path of the cutting device 2.

Fig. 3F shows a last slice R obtained after the last cut Cf, which rejects a last portion Bf that includes an irregular rear edge of the slab P.

It should be pointed out that the moment when this half-turn rotation is carried out is determined by the management and control device and forms part of the processing parameters and it is not required after the penultimate cut as in them illustrated example, but instead, can occur between any two of the many cuts Ci, Cm and Cf to be made to the slab P.

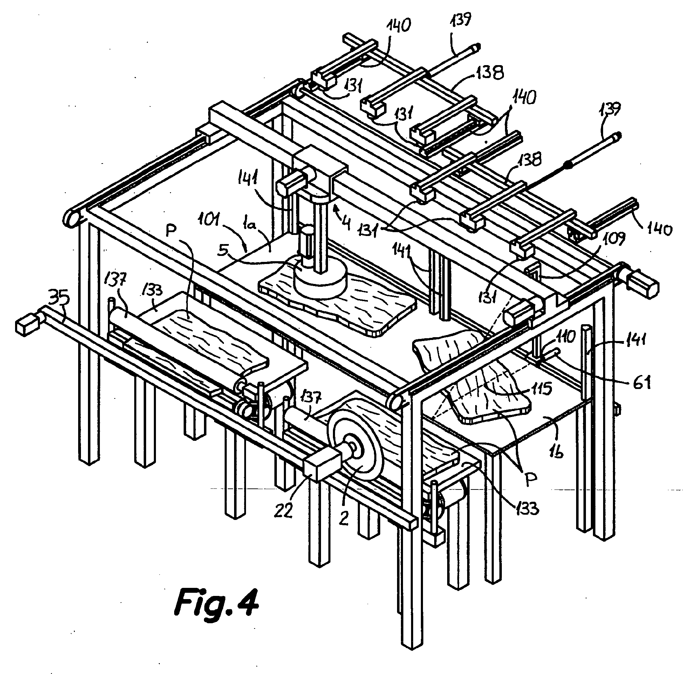

In relation to Fig. 4, a description is provided below of a control device in accordance with this invention applied to a slicing apparatus for natural cork slabs P where an exploration area or exploration support surface 101, on which the slab P exploration is carried out and the processing area or processing support surface 1, on which the slabs P are cut, are both within range of a four-shaft manipulator 4. Here, the processing parameters produced from the exploration parameters for a specific slab P are directly supplied to the manipulator 4 so that it can perform the specific slab P processing, consequently omitting the operations and means of temporary storage and subsequent recognition of the explored slabs P.

In the exemplary embodiment illustrated in Fig. 4, the exploration support surface 101 has two exploration positions 1a, 1b adapted to be alternatively attended by an operator and, together with the exploration support surface 101, two processing support surfaces 133 are incorporated, each one fitted with a securing device and roller drive 137, adapted to both secure the slabs P and produce their forward movement. Such as roller device 137 is described in patent application ES 200402224 from the same applicant. A single cutting device 2 is mounted in a manner that allows it to move along some guides 37 next to edges of the processing support surface 133. Operation of the cutting disc 2 is similar to that described above in relation to the exemplary embodiment of Fig. 2 and is arranged to cut slices from two slabs P located on the two processing support surfaces 133 with each pass.

The turning over of the slab P is performed by the same manipulator 4 between two predetermined cutting operations. For this reason, at the right time, the manipulator 4 first grips the slab P with its gripping device 5 while this is still held by the roller device 137, then, the roller device 137 opens to release the slab P and then the manipulator 4 turns it over. Finally, the roller device 137 closes to grip the object P again and the manipulator 4 releases it in order to complete the slicing.

In the exploration area or exploration support surface 101, each exploration position 1a, 1b is fitted with a system of three exploration cameras 131 mounted on a mobile chassis 138, which moves along guides 140 and operated by an actuator 139 in order to change between an operational position, in which the cameras 131 are arranged to cover the corresponding exploration position 1a, 1b in its field of vision and a non-operational position, in which the cameras 131 are removed from the exploration area 1. The exploration means also include a marker 109 in order to trace a mark 115 as described above. This marker 109 is mounted on a mobile support 110 and adapted to be manually moved in relation to the entire exploration area 1 to locate the mark 115 in a desired position on an object P positioned on one or the other of the exploration positions 1a, 1b. Obviously, in the case where the electronic means 18 are adapted to generate the processing parameters in a fully automatic fashion from the exploration parameters, as described above, the marker 109 is omitted.

The two mobile chassis 138 alternate between their two operational and non-operational positions in accordance with exploration operations performed alternatively by the operator at each of the exploration positions 1a, 1b. The manipulator 4 operates to transfer an explored slab P from that exploration position (1a in Fig. 4), in which the camera 131 system is in the non-operation position, to one of the processing areas 133, while the exploration means and the operator perform the exploration of a new slab in the other exploration area (1b in Fig. 4), where the camera 131 system is in the operational position. In order to prevent operator access to the exploration position where the manipulator is operating, the device includes a light-beam barrier 141 in each exploration position, which is electronically controlled to stop operation of the apparatus when crossed by the operator. Both barriers are activated and deactivated alternately in accordance with the slab P exploration and transfer operations that are being carried out by the operator in one or the other exploration positions 1a, 1b.

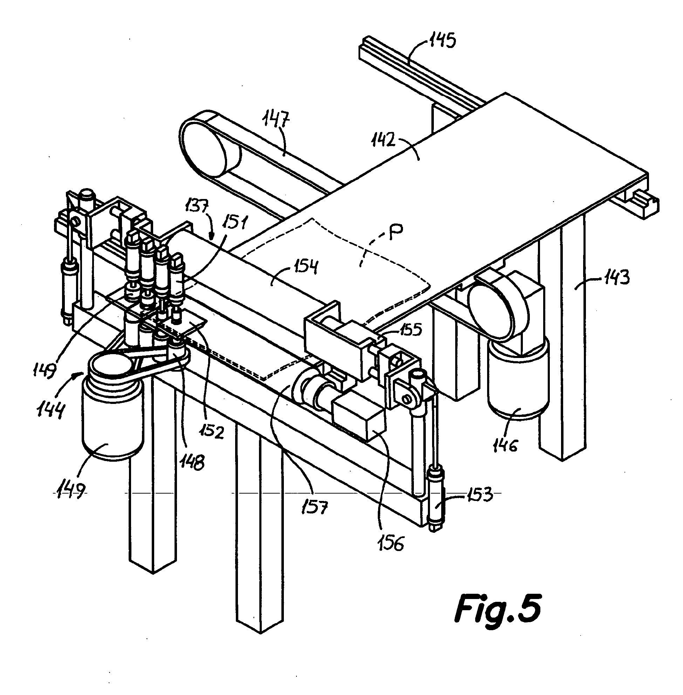

Now referring to Fig. 5, which shows a cutting device that produces discs from objects P in the form of thin slices of natural cork that are only slightly irregular in certain cases, although generally with the presence of defects or blemishes that could mean that the associated disc is unusable, although only partially. In accordance with an exemplary embodiment of this invention, the management and control device is adapted to govern the disc cutter. The manipulation means are not illustrated.

In the example of Fig. 5, the support surface 142, together with the roller device 137, are mounted on a fixed frame 143, to which a disc cutter 144 is secured. The movements of the support surface 142 are guided, for example, by some rectilinear guides 145 joined to the fixed frame 143 and driven by a motor 146 connected to the support surface 142 by means of a toothed belt 147. Thus, the sheet P can be moved by rotation of the roller device 137 rollers in a forward direction and by movement of the support surface 142 in a direction parallel to the rollers, in other words, in a transversal direction to the forward direction, while the disc cutter unit 144 remains stationary.

The disc cutter unit 144 includes a series of circular gouges 148, with various diameters, driven together by a motor 149 and a series of rams 150, each of which is aligned with one corresponding circular gouge 148. Each ram 150 is independently driven by its respective pneumatic cylinder 151 to move against its corresponding circular gouge 148 via an aperture in a corresponding mobile plate 152, with interposition of the object P in order to cut a circular piece from said object P.

Here, the electronic device is adapted to independently govern, in a synchronised fashion, the operation of actuators 153 for the movements of a pressure roller 30 on the roller device 137, motors 155, 156 that rotate the pressure roller 30 and a support roller 29 respectively, together with the pneumatic cylinders 151 that move the rams 150, in accordance with processing parameters corresponding to the specific object P.

The device of this invention described above enables a management and control procedure to be implemented for an automatic handling and processing apparatus for rough natural cork slabs in irregular shapes, sizes, contours, relieves and/or textures.

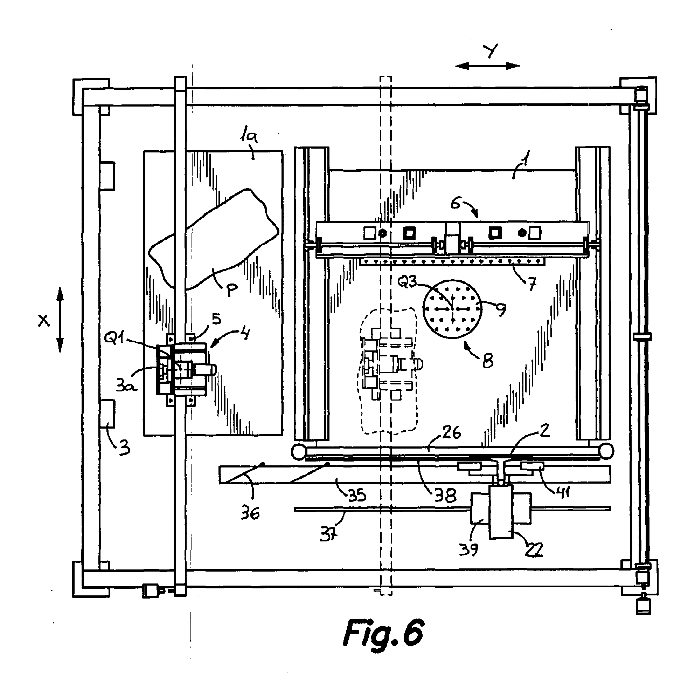

Referring to Fig. 6, the automatic handling and cutting device of this invention is described below, which is applied to the slicing of sections of unprocessed natural cork, which constitutes one of the steps in a cork production procedure. It should be emphasised however, that the apparatus of this invention can be applied to perform other cutting operations or other processes to slabs having irregular shapes, sizes and contours.

The apparatus comprises a processing support surface 1, in relation to which, a cutting device 2 is operationally positioned which, in the illustrated example, is a cutting disc 2 driven by a motor 22. Guide stops 41, which are described below, are installed at a distance from said cutting device 2, which is suitable for determining the widths of successive slices to be cut from one of said objects P in combination with suitable movements of the slab P in a forward direction. A device, consisting of some automatic stop regulation means, allows said guide stop 41 position to be varied in relation to the cutting device 2 between two consecutive cutting operations.

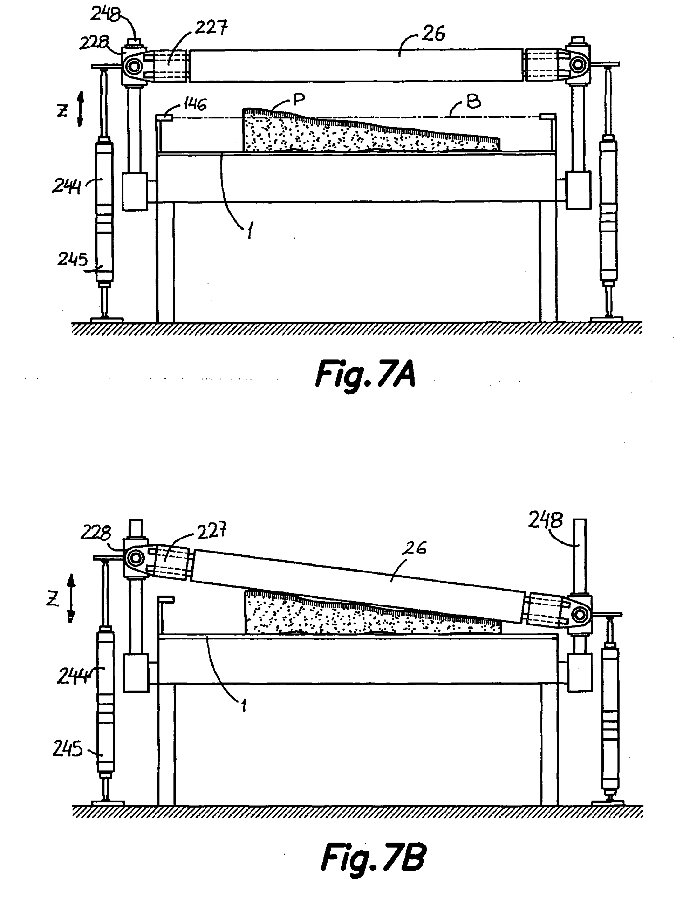

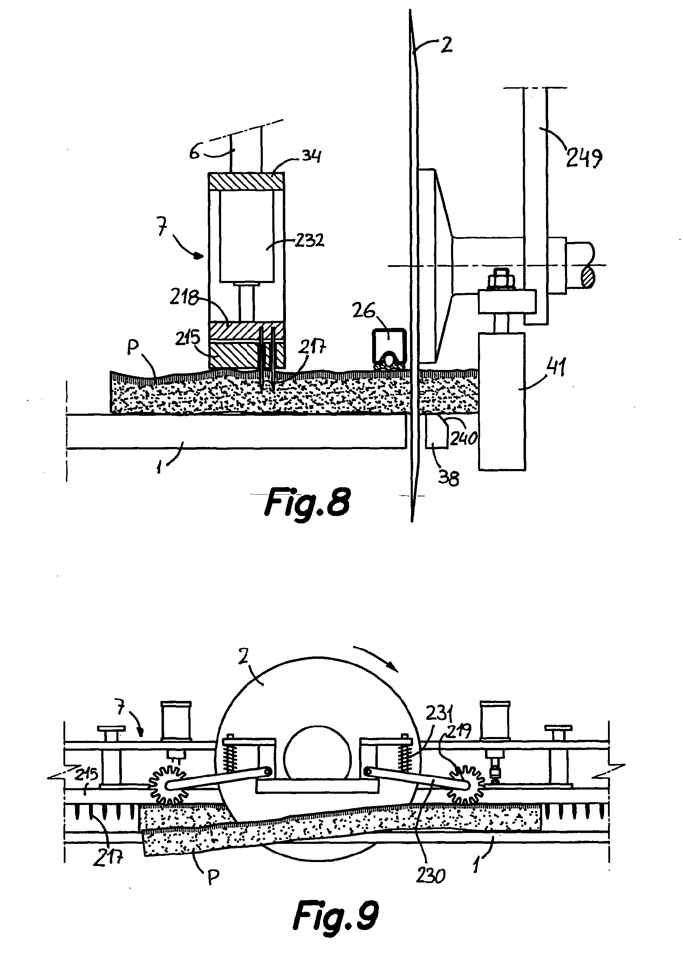

Next to an edge of the processing support surface 1, adjacent to the cutting device 2, automatic immobilising means 26 are incorporated and adapted to intermittently apply pressure and immobilise the slab P against the processing support surface 1. These automatic immobilising means 26 are described in greater detail below in relation to Figs. 7A, 7B and 8. In accordance with the description also given below, the cutting device 2 can be successively moved along the length of said edge of the support surface in interference with the projecting portion of the slab P in order to cut successive slices.

Close to the processing support surface 1 is a recognition support surface 1a where one of the objects P is received in a random position. Associated with said recognition support surface 1a are recognition means that include, for example, at least one electronic image-capturing camera 3 positioned to find and recognise the slab P in a random position on the recognition support surface 1a and, from said data recover cutting parameters, which were previously determined in another location by some exploration means in cooperation with a management and control device, from a memory that are associated with the specific slab P. Then, the apparatus is governed by said management and control device in accordance with the mentioned cutting parameters in order to perform the specific cutting operations on the recognised slab P.

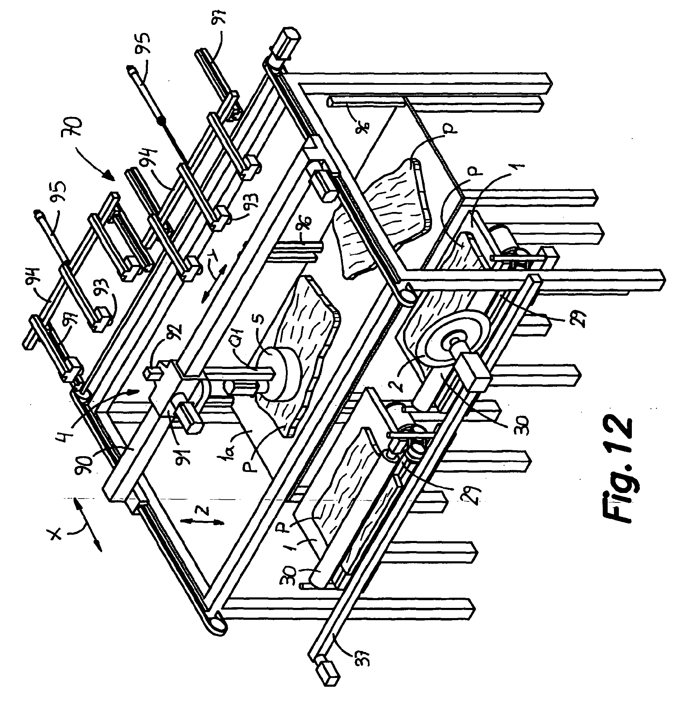

Alternatively, as will be seen below in relation to Figs. 12, 13 and 14, the recognition support surface 1a is directly associated with the mentioned exploration means 70, which are adapted to generate data representative of the location and characteristics of the slab P. These data are then employed by the management and control device to determine the cutting parameters associated with this specific object P, which are applied directly to govern the cutting apparatus without affecting the mentioned recognition pass of the slab P.

The mentioned cutting parameters associated with each specific object P include, for example, the position, orientation and number of cuts to be performed on the slab P, together with the moment to rotate the slab P by half a turn between two consecutive cuts and which could be determined by some other means apart from exploration of slab P by at least one camera, for example, by manually entering data into a computer memory.

In the exemplary embodiment of the invention shown in Fig. 6, the apparatus comprises a first handling device 4, carrying a first gripping assembly 5, which includes means to grip, by piercing, at least one of the objects P in cooperation with a support device and retain it by piercing, together with means to release the previously gripped slab P. Various exemplary embodiments of such a gripping device are described in detail below.

The mentioned first handling device 4 comprises means of guidance and drive arranged to transfer said first gripping assembly 5 in the three spatial directions, X, Y and Z. The three directions X, Y and Z are mutually orthogonal and, in accordance with the drawings, the X direction is parallel to the processing support surface 1 and perpendicular to the plane of the cutting device 2, the Y direction is parallel to the processing support surface 1 and parallel to the plane of the cutting device 2, and the Z direction is normal to the processing support surface 1 and also normal to the recognition support surface 1a. In addition, this first handling device 4 includes driving means to rotate the first gripping assembly 5 with respect to an shaft Q1 normal to the processing support surface 1. In the exemplary embodiment shown in Fig. 6, the first handling device 4 comprises a portico arranged and operated to be moved in the Y direction, a first carriage arranged and operated to be moved in the X direction and a second carriage arranged and operated to be moved in the Z direction. The first gripping assembly 5 is mounted on said second carriage so that it can be rotated with respect to shaft Q1 by means of a rotation device. Fig. 6 shows the first manipulator 4 in trace lines with a gripped slab P located on the support surface 1. This first handling device 4 can incorporate an additional electronic image capture camera 3a, fitted with the same movements as the first gripping assembly 5 employed to recognise surface details of the slab P.

The first handling device 4 is governed by the management and control device in accordance with the cutting parameters in order to perform more transfer and orientation functions, which comprise taking the slab P from said recognition support surface 1a, suitably orientate it and transfer it to the processing support surface 1, where the slab P is transferred to a second handling device 6 associated with the processing support surface 1.

The mentioned second handling device 6 carries a second gripping assembly 7, which includes, in a similar fashion to the first, means to grip, by piercing, at least one of the objects P in cooperation with a support device and retain it by piercing, together with means to release the previously gripped slab P. This second handling device 6 is also of the portico type and includes driving means arranged to transfer said second gripping assembly 7 in two of the previously identified spatial directions X and Z. The second handling device 6 is governed by the management and control device to carry out forward movement functions consisting of performing movements of said slab P in a forward direction (direction X in the figures) until the slab P projects over the support surface by a distance equal to the position of the two mentioned guide stops 41. Of course, movements can also be made in a direction opposite to said direction X in order to move the slab P backwards in order to facilitate its rotation. Although in the illustrated example, the second handling device 6 is operated to transfer the second gripping assembly 7 in another of the spatial directions, Z, normal to the processing support surfaces 1 in order to facilitate the transfer of the slab P from the first handling device 4 to the second handling device 6, or vice versa, the movement in this second direction, Z, is not essential, depending on the configurations of the first and second gripping assemblies 5, 7 as explained below.

The apparatus also comprises some automatic means of moving the cut, adapted to perform relative movements with interference between the slab P and the cutting device 2 in a direction of cut (the Y direction in the figures). In accordance with the exemplary embodiment shown in Fig. 6, said automatic means of moving the cut comprise a mobile support structure 39, on which the cutting device 2 is mounted and a guidance device 37 on which the mobile support structure 39 is installed. Driving means are connected to the mobile support structure 39 and governed to move the cutting device 2 in relation to the processing support surface 1 in the direction of cut, with the slab P immobilised in position on the processing support surface 1 by the mentioned automatic immobilising means 26.

In accordance with another exemplary embodiment (not shown), the automatic means of moving the cut have an inverted construction, in which the cutting device 2 is mounted on a fixed support structure, while the processing support surface 1 forms part of a table installed on a guidance device and connected to driving means governed to produce movements of the processing support surface 1 in relation to the cutting device 2 in the direction of the cut.

This apparatus, in accordance with the exemplary embodiment shown in Fig. 6, also includes a third handling device 8, carrying a third gripping assembly 9, which, in the same way as the second and third, includes means to grip, by piercing, one of said objects P in cooperation with a support elements, and retain it by piercing, together with means to release said previously gripped slab P. This third handling device 8 comprises driving means arranged to rotate the third gripping assembly 9 with respect to a shaft Q3 normal to the processing support surface 1 and is positioned so that said rotation can be carried out without the slab P interfering with the cutting device 2. In accordance with another exemplary embodiment, at least one upper plate of the third gripping assembly 9 is circular and arranged to rotate in a circular aperture of the processing support surface 1, with the outer surface of the plate level with said processing support surface 1. Driving means are connected to the gripping assembly in order to make it rotate a predetermined angle in said circular aperture in order to, for example, half-turn the gripped slab.

However, the third gripping assembly 9 of the third handling device 8 could have an upper plate without a circular contour (not shown), for example, being rectangular instead, and housed in an aperture in the processing support surface 1 having a corresponding contour. In this case, said third handling device 8 is fitted with driving means arranged to move said third gripping assembly 9 in the Z direction, normal to the processing support surface 1, in addition to the mentioned rotating means with respect to shaft Q3. Thus, the third gripping assembly 9 is raised out of the housing provided by said aperture in said processing support surface 1 before being rotated half a turn, and then is lowered again inside the aperture, leaving the upper surface of the plate level with the processing support surface 1.

In any case, the first handling device 4, the second handling device 6 and the third handling device 8 are adapted to transfer a slab P from any one to any other.

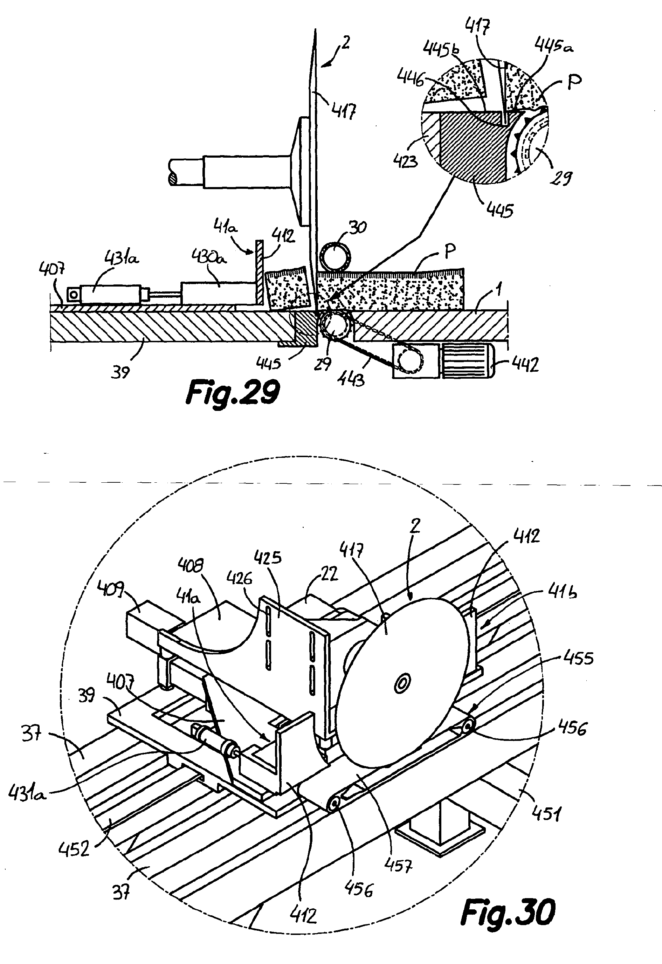

The management and control device is adapted to govern said automatic immobilising means, said automatic forward moving means, said automatic means of cutting movements, said automatic rotating means, and said automatic stop regulating means in a synchronised fashion in order to automatically carry out successive cutting operations in order to obtain successive slices of equal or different widths from the slab P. One alternative exemplary embodiment for said automatic immobilising means are described below in relation to Fig. 29.

The apparatus of this invention is not limited to the illustrated exemplary embodiments, but instead is open to several alternative embodiments. For example, it could be fitted with only the first handling device 4 which, in addition to the previously described transfer and orientation functions, would also perform those of forward movement and rotation. Or the second handling device 6 could be omitted, with the first handling device 4 performing the transfer, orientation and forward movement functions, and the third handling device 8 carrying out the rotation functions. Alternatively, the third handling device 8 could be omitted, in which case, the second handling device 6 would include some additional driving means arranged to rotate the second gripping assembly 7 at least with respect to a shaft Q2 (not shown), normal to the processing support surface 1, in order to perform the rotation functions.

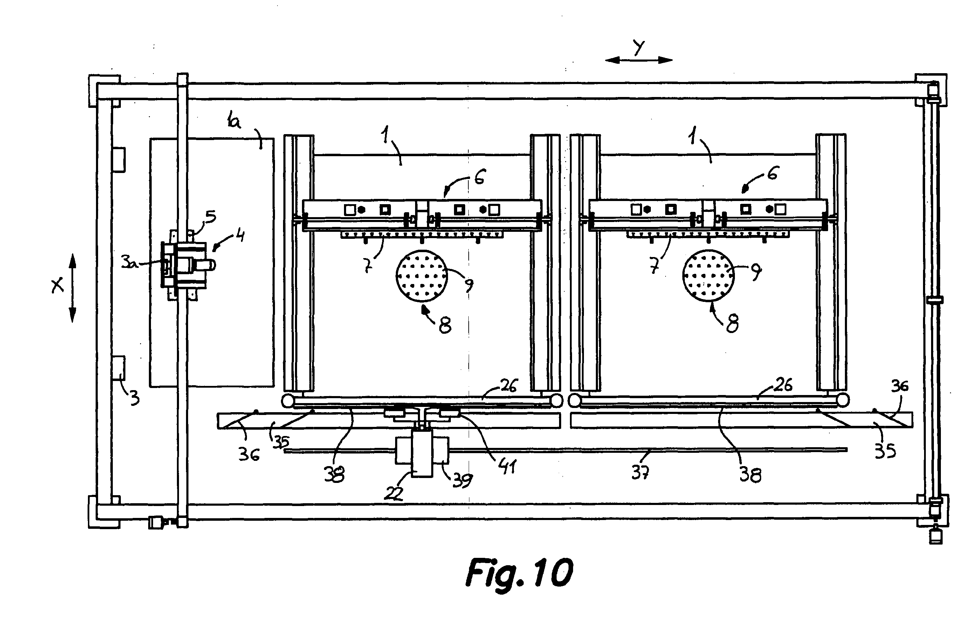

Fig. 12 shows an alternative exemplary embodiment in which the recognition support surface 1a is associated with the mentioned exploration means 70 and has two exploration positions adapted to be alternatively attended to by one operator. Two support surfaces 1 are incorporated close to the recognition support surface 1a, each fitted with a securing device and roller drive 29, 30, adapted to carry out the gripping of the objects P as well as the forward movements such as that described below in relation to Fig. 29. A single cutting device 2 is mounted in a manner that allows it to move along the length of guide 37 next to edges of the processing support surface 1. Operation of the cutting disc 2 is similar to that described above in relation to the exemplary embodiment of Fig. 10 and is arranged to cut slices from two objects P located on the two support surfaces 1 with each pass. Both the two recognition support surface 1a exploration positions and the two support surfaces 1 are located below the radius of action of a first handling device 4 of a type similar to that described above in relation to Fig. 6, which comprises a portico 90 arranged and operated to be moved in the Y direction, a first carriage 91 arranged and operated to be moved in the over said portico 90 in the Y direction and a second carriage 92 arranged and operated to be moved in the over said first carriage 91 in the Z direction. The first gripping assembly 5 is mounted on said second carriage 92 so that it can be rotated with respect to shaft Q1 by means of a rotation device. The half turn of the slab P is performed by the same first manipulator 4 between two predetermined cutting operations. For this reason, at the correct moment, first the first handling device 4 grips the slab P with its gripping device 5 while former is still held in place by the roller device 29, 30. Then the roller device 29, 30 is opened to release the slab P and then the first manipulator 4 performs the half turn operation. Finally, the roller device 29, 30 is closed to grip the object P again and the first handling device 4 releases it in order to complete the slicing.

In the exploration area or exploration support surface 1a, each exploration position, in this example, is fitted with a system of three exploration cameras 93 mounted on a mobile chassis 94, which moves along guides 97 and operated by an actuator 95 in order to change between an operational position, in which the cameras 93 are arranged to cover the corresponding exploration position in its field of vision and a non-operational position, in which the cameras 93 are removed from over the exploration area 1.

The two mobile chassis 94 alternate between their two operational and non-operational positions in accordance with exploration operations performed alternatively by the exploration means 70 at each of the exploration positions. The manipulator 4 operates to transfer an explored slab P from this exploration position in which the camera system 93 is in a non-operational position to one of the first support surfaces 1, while the operator positions a new object P on the other exploration position, where the camera system 93 is in an operational position for its exploration. In order to prevent operator access to the exploration position where the manipulator 4 is operating, the device includes a light-beam barrier 96 in each exploration position, which is electronically controlled to stop operation of the apparatus when crossed by the operator. Both barriers are activated and deactivated alternately in accordance with the object P exploration and transfer operations that are being carried out by the operator in one or the other exploration positions.

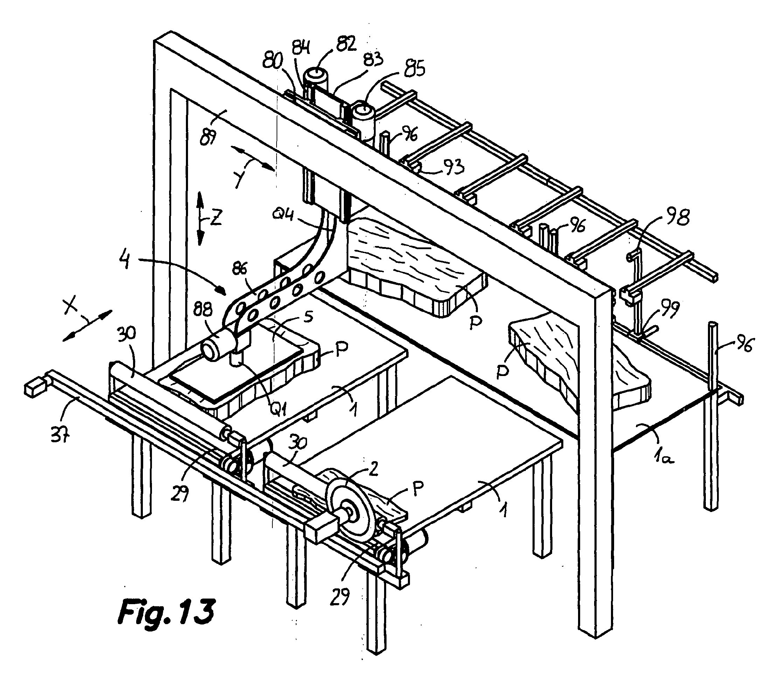

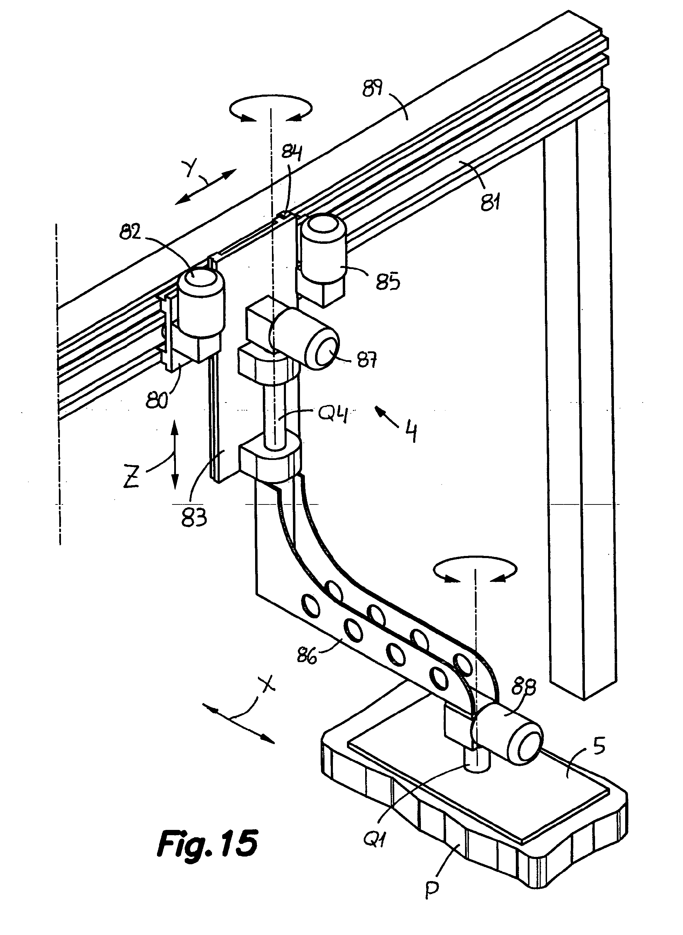

Fig. 13 shows yet another exemplary embodiment in which the layout of the recognition support surface 1a, supports surfaces 1, roller devices 29, 30, and cutting device 2 is similar to that described above in relation to Fig. 12. Here however, the first handling device 4 has a different construction as shown in greater detail in Fig. 15. Thus the first manipulator 4 comprises a first carriage 80 arranged to move by means of motor 82 along a first guide 81 arranged in the Y direction over a stationary portico 89. A second carriage 83 is arranged to move along a second guide 84 fixed to the first carriage 80 in a Z direction, driven by a second motor 85. A shaft Q4 is mounted on said second carriage 83 and is normal to the processing support surface 1, which is fixed to one end of an arm 86. The mentioned shaft Q4 is driven by a third motor 87 so that it rotates said arm 86, which has shaft Q1 mounted at the other end, and normal to the processing support surface 1, with respect to which it is arranged to rotate the first gripping assembly 5 driven by a fourth motor 88. The transmission of the movements of the mentioned first, second, third and fourth motors 82, 85, 87 and 88 is carried out by some respective precision gearboxes, for example, of the type employing epicicloidal or planetary gears, preferably integrated forming respective geared motor groups to provide maximum precision in the movements of the first handling device 4. The control system is capable of positioning the cutting device in any X, Y coordinate point on the recognition support surface 1a and on any of the support surfaces 1 by means of a combination of movements of the first carriage 80 in the Y direction and rotation of the arm 86 with respect to shaft Q4. The orientation of the gripping assembly 5 is carried out by rotation with respect to the shaft Q1.

In this exemplary embodiment, the exploration cameras 93 are mounted on a fixed chassis so that they do not interfere with the first handling device 4, and the exploration means also include a marker 98 adapted to trace a mark on the slab P. This marker 98 is mounted on a mobile support 99 adapted to be manually moved in relation to the entire recognition support surface 1a in order to locate said mark in a desired position on the slab P, which is now located on one or the other of the exploration positions. Obviously, in the case where the management and control device is adapted to generate the processing parameters in a fully automatic fashion from the exploration parameters, the marker 98 is omitted.

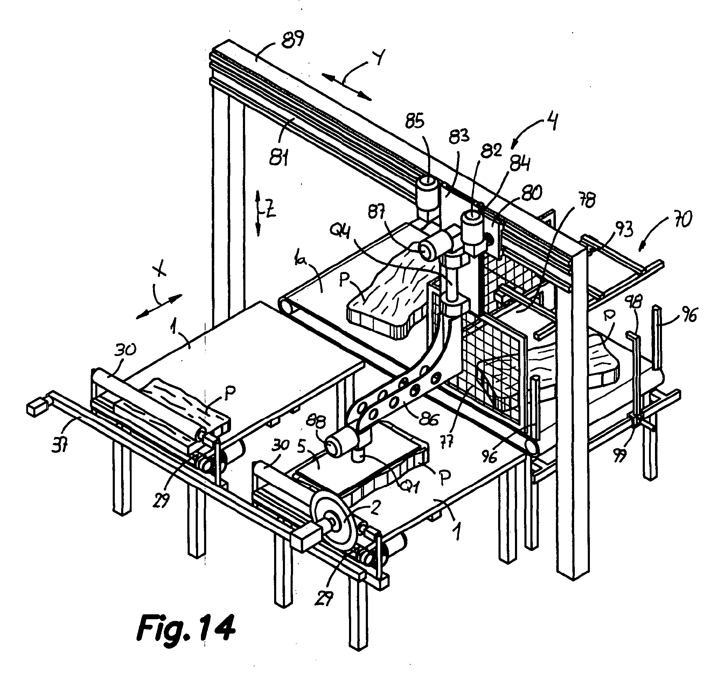

Fig. 14 shows yet another exemplary embodiment in which the layout of the support surfaces 1, roller devices 29, 30, cutting device 2 and first handling device 4 is similar to that described above in relation to Fig. 13. Here however, the recognition support surface 1a defines a single exploration position associated with the exploration means 70 and attended by an operator, and a transfer position. The mentioned exploration position is protected by a physical barrier 77 and optionally by some light beam barriers 96. The recognition support surface 1a comprises a conveyor belt arranged to transfer the slab P from the exploration position through an aperture 78 in said physical barrier 77, up to said transfer position, where the previously recognised or explored slab P is placed within reach of the first handling device 4.

The first handling device 4 with a rotating arm, described in relation to the exemplary embodiments of Figs. 13 and 14 provides equivalent performance to that of a mobile portico manipulator as shown in Figs. 6, 10 and 12; however, it is both lighter and more robust, with fewer requirements with regard to installation conditions. For example, it would be feasible to have a single first handling device 4 with a rotating arm to attend to a series of support surfaces 1 above the two shown in Figs. 13 and 14, which would be practically quite unfeasible with a mobile portico manipulator due to its probable great weight.

It should be pointed out that in any of the exemplary embodiments shown in Figs. 12, 13 and 14, the recognition support surface 1a could be associated with the recognition means 3 instead the exploration means 70 if the objects P are previously explored somewhere else.

Returning to Fig. 6, next to the cutting device 2, opposite to where the automatic forward moving means operate, there is a static support batten 38 (better shown in Fig. 8), which has an upper surface that is coplanar with the processing support surface 1, intended to support the part of the slab P, which makes up the slice, during the cutting operation, and an inclined surface 240 or chamfer that facilitates the drop, due to gravity, of the slab P after cutting. The apparatus also comprises means of transport 35, such as an endless conveyor belt (Figs: 6 and 10), which are suitably driven and arranged along the processing support surface 1 and adjacent to the cutting device 2 on the side opposite to where the automatic forward moving means operate. The successive slices cut from the slab P, together with some irregular front and rear edges rejected from the slab P, drop as they are cut on these, which are removed taking them away from the cutting device 2. The means of transport 35 are associated with one or more deflectors 36, which are driven by driving means governed by the management and control device in accordance with the cutting parameters, in order to classify said slices in accordance with their widths and to separate said irregular front and rear edges causing them to drop into different containers (not shown).

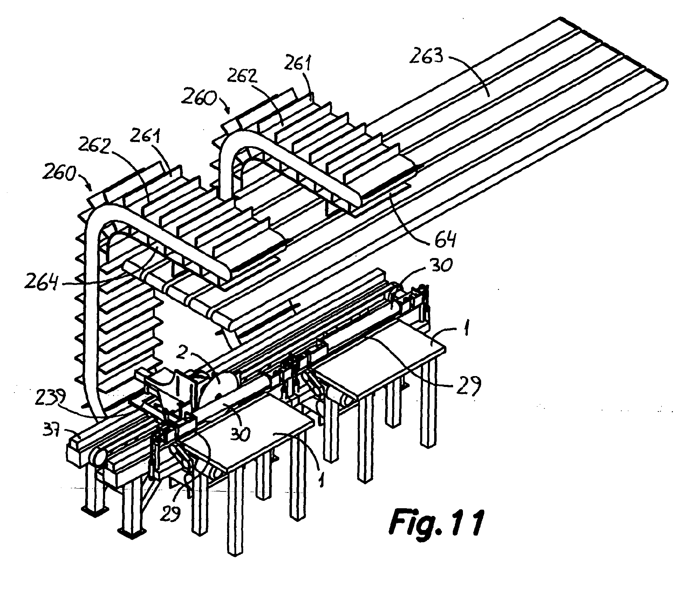

In a variant shown in Fig. 11, the means of transport include, for example, a conveying-lifting device 260 for each processing support surface 1, which is arranged transversally to the cutting plane, below the cutting disc 2. The mentioned conveying-lifting device 260 comprises a continuous belt or similar to which fins 261 are attached to define compartments 262 between them, each capable of receiving one of the slices or rejected irregular edges. Alternatively, each compartment 262 could comprise a box or other similar configuration that is fixed to the continuous belt or moving element. The conveying-lifting device 260 defines a vertical elevation section that ends in a horizontal classification section arranged over a plurality of transversal conveyor belts 263. Some panels 264 arranged under said horizontal section prevent the slices or rejected irregular edges from falling while they are transported along its length. These panels 264 are articulated by one of their lateral edges and individually and selectively operated to rotate around said lateral articulation and allow the corresponding slice or rejected irregular edge to drop onto one of the transversal conveyor belts 263. The panels 264 are driven by corresponding motors with pinion and chain transmissions. Preferably, the panels 264 open in the direction of forward movement of the belts 263 to provide an sliding effect the softens and guides the falling slice or rejected irregular edge onto the corresponding transversal conveyor belt 263. The management and control device governs, in a coordinated manner, the driving means for the cutting device 2, means of driving the movements of the conveying-lifting device 260 and means of driving the opening of the panels 264 in accordance with the cutting parameters in order to classify the slices in accordance with their width and to separate the rejected irregular edges.

Obviously, although the conveying-lifting device 260 shown in Fig. 11 defines a path that is generally in a "C" shape, other configurations are possible. For example, the conveying-lifting device 260 could define a path that is generally in a "Z" shape to prevent dust and other dirt from falling from the upper section of the device onto the cutting apparatus.

Now referring to Figs. 7A and 7B, the mentioned automatic immobilising means comprises a securing bar 26 arranged in a lying position adjacent to the side of the cutting device 2 where the automatic forward moving means operate. The mentioned securing bar 26 is coupled by its ends in a sliding manner to some supports 227, which are in turn, articulated with some corresponding mobile supports 228 associated with driving means. These mobile supports are guided, for example, so that they slide along the length of some corresponding fixed vertical bars 248. In the illustrated exemplary embodiment, the mentioned driving means comprise, for each of the mobile supports 228, a pair of fluid-dynamic cylinders 244, 245 coupled in tandem and governed independently by the management and control device for the retraction and extension of their stems. Stem retraction independently moves said mobile supports 228 in the Z direction, normal to the processing support surface 1, and this moves said securing bar 26 closer to the processing support surface 1 in order to trap the slab P with the possibility of adapting to the securing bar 26 and the irregularities of the slab P (Fig. 7B). An extension of the stems moves the securing bar 26 away from the processing support surface 1 in order to release the slab P (Fig. 7A).

A zone prior to the securing bar 26 contains detection means 246, for example, a laser barrier B associated with a laser transmitter-receiver pair to detect the presence of the slab P at a predetermined height over the processing support surface 1. In function of such detection, the detection means 246 generate signals from which the management and control device activate the operation of one, the other or both fluid-dynamic cylinders 244, 245 of each tandem during the operation to raise the securing bar 26 in order to only move the securing bar 26 away to the necessary height over the processing support surface 1 to allow the passage of the detected slab P, in order to save time and, in the case of compressed air operation, to save fluid.

However, the apparatus of this invention is not limited to said fluid-dynamic cylinders 244, 245, with the fitting of single fluid-dynamic cylinders, nut and spindle mechanisms driven by an electric motor or any other known linear operation device that can be governed by the management and control device.

Preferably, a zone of the processing support surface 1 below the securing bar 26 is fluted to improve the immobilisation of the slab P and some load cells are arranged to detect when the slab P is immobilised by the pressure of the securing bar 26 in order to enable operation of the cutting device 2.

Fig. 8 shows the cutting disc 2 next to the processing support surface 1 over which the second gripping assembly 7 of the second handling device 6 is gripping a slab P in order to carry out the forward movements of the slab P up to a position in which the front edge of the same is able to make contact with the guide stops 41. These guide stops 41 are mounted on a mobile support 249 which are adapted to be moved by a linear actuator (not shown) under commands from the management and control device in accordance with the cutting parameters to vary the widths of successive slices to be cut from a same slab P. The securing bar 26 can be seen adjacent to the cutting disc 2 immobilising the slab P in a position against the processing support surface 1. The cutting disc 2 moves with respect to the processing support surface 1 in interference with the slab P in order to perform the cut.

The second gripping assembly 7 is connected to an active member of the second handling device 6 by means of a structure 234 to which a plate 215 is fixed which contains pass-through holes, through which a plurality of pointed elements 217 pass that are fixed to a support 218 coupled in a mobile fashion to said plate 215. A drive device, such as a fluid-dynamic cylinder 232, is operationally connected between the structure 234 and the support 218 in order to move this with respect to the plate 215 and, in this way, extend or retract the pointed elements 217.

In accordance with this invention, the gripping assemblies can operate in accordance with other, different piercing principles. Thus, for example, they could work as a clip, with at least one of its jaw elements driven so that it grips the slab by its upper and flower faces. Alternatively, the clip could comprise some jaw members arranged to grip the flattened slab by its lateral edges.

In relation to Fig. 9, a description is given below of an additional device intended to reduce the wear on cutting device 2, when the apparatus is intended to slice slabs of cork, due to the highly abrasive properties of cork, especially a surface layer of cork. This device comprises at least one incisive part 229 arranged in a static manner, or preferably rotating, as in the illustrated example, aligned with the cutting device 2 on its leading edge. In the exemplary embodiment shown in Fig. 9, the cutting device 2 is of a double-action type, so that it alternately presents two opposite leading edges. In this case, the device includes one of said incisive parts 229 on each leading edge. Each incisive part 229 is mounted on a mobile support 230 articulating with a support structure 250 that is fixed with respect to the cutting device 2. Each mobile support 230 is connected to an resilient element 231 arranged to press said incisive part 229 against the slab P in order to produce a channel in the upper part of the slab P as this is moved towards the cutting device 2 in order to facilitate penetration of the cutting device 2. Obviously, the device could easily be configured in a different way (not shown) in order to produce the channel in the upper part, the lower part or both, of the slab P.

Finally referring to Fig. 10, an exemplary embodiment of the apparatus of this invention is shown, which comprises a single recognition surface 1a associated with said recognition means 3 and two support surfaces 1. Each processing support surface 1 is associated with a corresponding second handling device 6, a corresponding third handling device 8 and some corresponding automatic immobilising means 26, all similar to those described above. This layout incorporates a single first handling device 4 to supply objects P from the recognition support surface 1a to the various support surfaces 1, and a single cutting device 2 is mounted on a mobile support structure 39 installed on a guide device 37 and driven so that it moves the cutting device 2 in the direction of the cut (Y direction in Fig. 10) along the two support surfaces 1 in order to cut the two or more objects P arranged on the same in each path. The first handling device 4 and the cutting device 2 are also similar to those described above.

Each support surface can be associated with a conveyor belt 35, such as in the illustrated example, or a single conveyor belt can be used for all the support surfaces 1. Alternatively, the apparatus could incorporate any other system for collecting, transporting and classifying the slices in accordance with their width.

With the construction of Fig. 10, time can be gained and production considerably increased. Evidently, there may be more than two support surfaces served by a single first handling device 4.

Just as has been described above in relation to Fig. 6, the apparatus of this invention comprises some processing and recognition support surfaces 1,1a that act as support elements for the objects P and means of movement, such as one or more handling devices 4, 6 8, each of which incorporates an automatic gripping device. Each automatic gripping device is made up of a gripping assembly 5, 7, 9, which includes means to penetrate at least one of said objects P by a plurality of pointed elements 306 in cooperation with a support element, which could be one of the support surfaces 1, 1a or another elements, such as will be described below, in order to hold and retain by piercing said object P, together with means to release said previously held object P. The gripping assembly 5, 7, 9 can be produced in several manners, some of which are described below.

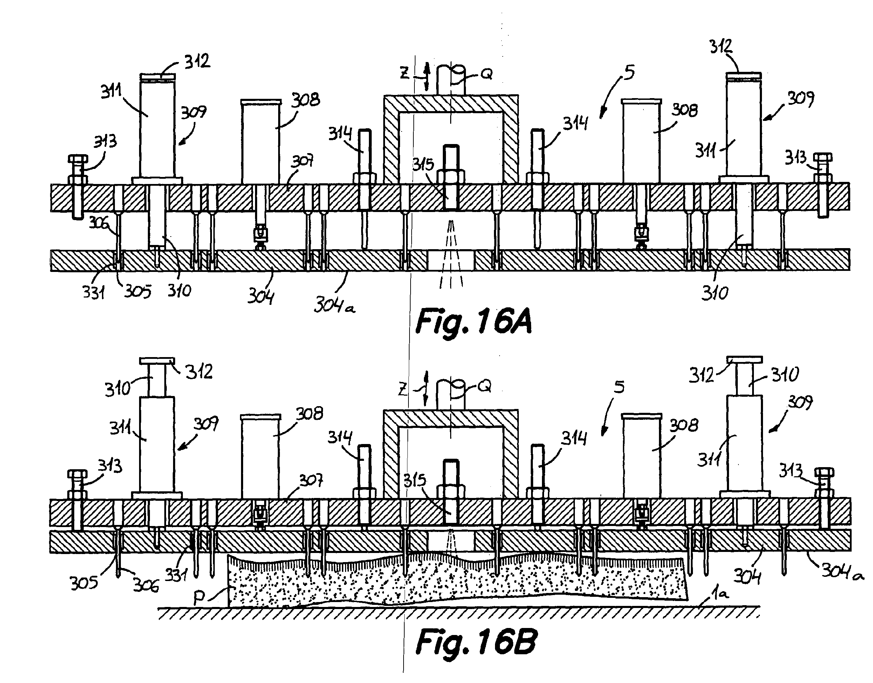

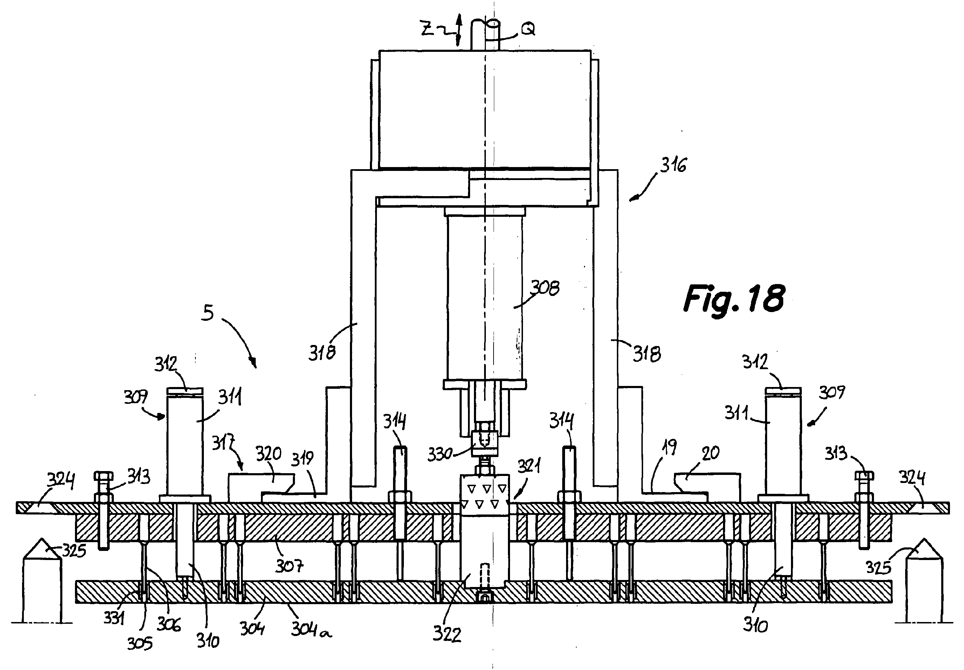

In the exemplary embodiment shown in Figs. 16A, 16B and 18, said gripping assembly 5 comprises a plate 304, which has an outer surface 304a facing or capable of facing said support surface 1, 1a. The plate 304 has a plurality of parallel pass-through holes 305 in said outer surface 304a. A support 307, coupled in a moving fashion to the plate 304, has a plurality of pointed elements 306 attached to it, with these said pointed elements 306 laid out coaxially with said pass-through holes 305. In order to carry out relative approach and retreat movements between said support 307 and the plate 304 in a direction parallel to the axis of said pass-through holes 305, means of movement 308 are arranged, for example, in the form of a fluid-dynamic cylinder. Preferably, the cited pass-through holes 305 in the plate 304 are interiorly coupled to some guide bushing 331, which guide the pointed elements 306.

The cited driving means 308 are arranged to carry out an extension movement that comprises the mutual approach of the support 307 and the plate 304 in order to cause the pointed elements 306 to sufficiently project beyond said outer surface 304a of the plate 304 in order to penetrate in one of said objects P and retain it by piercing (Fig. 16B). In a similar fashion, the driving means 308 are able perform a retraction movement that comprises a mutual moving away of support 307 and the plate 304 to cause the pointed elements 306 to return behind the outer surface 304a of the plate 304, thus releasing the previously held object P (Fig. 16A).

The plate 304 and the support 307 are coupled together by means of a rectilinear guide 309 that ensures the linearity of the mentioned extension and retraction movements. Said rectilinear guiding means 309 comprises at least one bar 310 fixed at one of its ends to the plate 304 and inserted through a guide sleeve 311 secured to the support 307. At the other end of said bar 310, which projects out of the guide sleeve 311 at the top, there is a retraction stop 312 that makes contact with the guide sleeve 311 at the limit of the pointed element 306 retraction movement. The cited guide sleeve 311 includes at least one linear ball bearing. Also included is at least one extension stop 313 fixed to the support 307 for making contact with the plate 304 (or fixed to plate 304 in order to make contact with the support 307) at the limit of the pointed element 306 extension movement. Advantageously, said extension stop 313 incorporates means of regulation, such as a threaded coupling and a locknut, to regulate its extension from the support 307 (or from the plate 304) and, in this way, regulate the maximum extension length of the pointed elements 306.

The driving means 308 comprise at least one fluid-dynamic cylinder 308 that is controlled by a valve system (not shown) in order to perform the extension and retraction actions.

In the exemplary embodiment shown in Figs. 16A and 16B, the cited gripping assembly 5 is connected to the means of movement 3 via the support 307 and the fluid-dynamic cylinder 308 is operationally connected by one side to the support 307 and, by the other side, to the plate 304. During the extension movement, the valve system is adapted to be controlled in a free-exhaust mode in order to maintain the fluid-dynamic cylinder 308 inactive, while driving means, for example, driving means of the manipulator 3, act in a direction normal to the support element 1 in order to produce the extension movement by reaction of the object P against the plate 304, just as shown in Fig. 16B.

The gripping assembly 5 advantageously includes damping means set up to exert a retaining force on the plate 304 during the extension movement in order to create a crushing pressure on slab P between the plate 304 and the support element 1. In the illustrated example, said damping means comprise one or more dampers 14 arranged between the support 307 and the plate 304, although the same effect can be achieved, for example, by controlling the fluid-dynamic cylinder 308 by a restrictor valve at the output of the same.

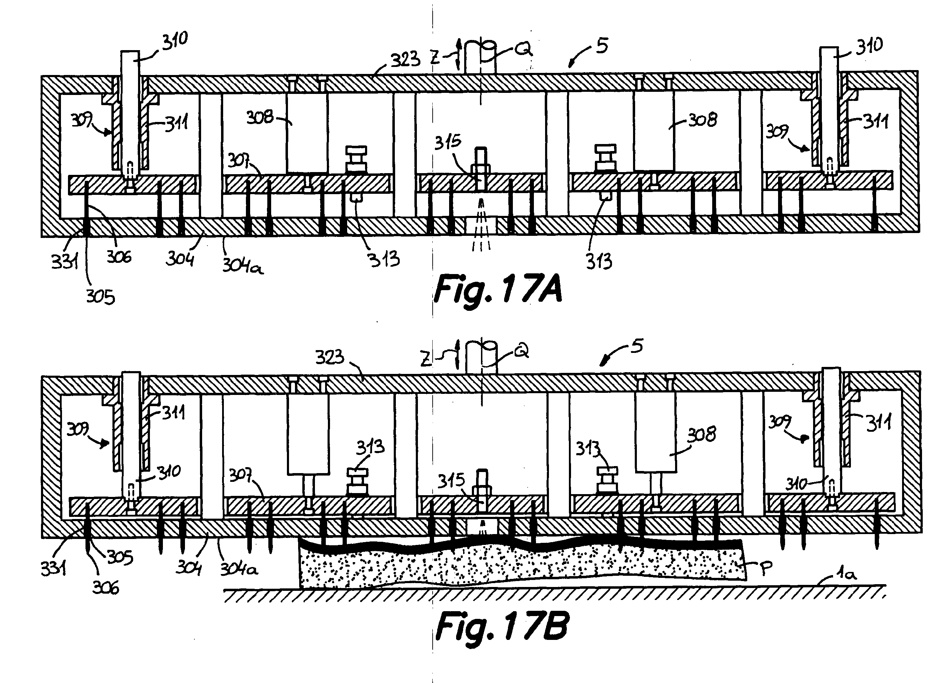

In another exemplary embodiment shown in Figs. 17A and 17B, the gripping assembly 5 has basically the same elements as in the previous exemplary embodiment, except that here, said plate 304 of the gripping assembly 5 is solidly joined to a structure 323 located on the opposite side of structure 307, with the gripping assembly 5 connected to the means of movement 3 by said structure 323. In this case, the fluid-dynamic cylinder 308 is operationally connected by one side of the structure 323 and by the other to the support 307. In this embodiment, the rectilinear guiding means 309 comprise at least one bar 310 fixed by one of its ends to support 307 and inserted via a guide sleeve 311 secured to the structure 323 and solidly joined to the plate 304 and located over the support 307. Here, the actual plate 304 presses the object P against the support elements 1a by force exerted by the means of movement 3.

In both preceding exemplary embodiments, the gripping assembly 5 includes detection means 315 adapted to produce an electrical signal indicating the presence (or lack) of an object next to plate 304, in order to determine whether or not one of said objects P is held by the gripping assembly 5. Such detection means 315 comprises at least an optical detector, although it could alternatively comprise other detection devices, such as at least one electromechanical micro-switch.

Again referring to Fig. 6, which shows first, second and third handling devices 4, 6, 8 dedicated to different uses and fitted with respective gripping assemblies 5, 7, 9 with specific characteristics. The first handling device 4 incorporates a gripping assembly 5 in accordance with any of the variants shown in Figs. 16A-16B and 17A-17B.

In accordance with another exemplary embodiment shown in Fig. 18, the gripping assembly 5 comprises a coupling port 317, at the same time that the first handling device 4 comprises a coupling terminal 316 configured and operated to automatically connect and disconnect itself to said coupling port 317 on the gripping assembly 5. The coupling terminal 316 of the cited first handling device 4 comprises at least one clip 318 operated by a fluid-dynamic device and fitted with arms 319 adapted to couple to and uncouple from some static elements 320 fixed on the coupling port 317 of the gripping assembly 5. The fluid-dynamic cylinder 308, which provides the relative movements between the support 307 and the plate 304, is incorporated into the coupling terminal 316 of the first handling device 4 and at the active end of the fluid-dynamic cylinder 308, there is an automatic coupling device 321 adapted to couple to and uncouple from a static member 322 secured to the plate 304 or support 307. This automatic coupling device 312 preferably includes an electromagnet that is fixed to the active end of the fluid-dynamic cylinder 308 by means of a hinge joint 330. Advantageously, said coupling terminal 316 of the first handling device 4, also incorporates the cited detection means 315. In this way, no electrical or fluid-dynamic connection is required between the manipulator 3 and the gripping device 5.

The gripping assembly 5 can optionally include self-centring rest housings 324, adapted to receive the corresponding ends of stationery support struts 325 arranged on a bank of gripping assemblies 5 (not shown) adapted to house several gripping assemblies within range of the first handling device 4, with the handling device 4 including said coupling terminal 316 and each gripping assembly 5 with one of said coupling ports 317, so that the first handling device 4 can be controlled by a management and control device in order to automatically and selectively take any one of the gripping assemblies 5 from said bank and return it again.

The plate 304 and the support 307 of the gripping assembly 5 can comprises, on at least one side of its contour, some respective indentations (not shown) to allow the entry of means of holding for the transfer of the object P from the gripping assembly 5 to said means of holding,

Although the previous automatic coupling system has been described in relation to the gripping assembly 5, for the exemplary embodiment of Figs. 16A and 16B, a similar system could be implemented with the gripping assembly 5 of the exemplary embodiment of Figs. 17A and 17B. It is also evident that it is possible to use any surface or element other than the processing and recognition support surfaces 1 and 1 a for the support element as shown in Fig. 6.

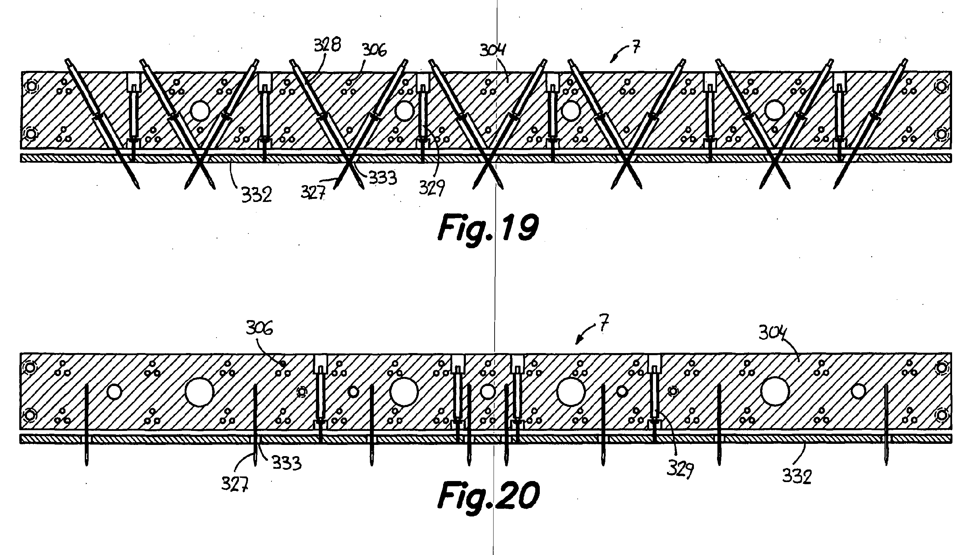

The second manipulator 6 comprises, for example, a portico with two axes X and Z and incorporates a elongated gripping device 7, two exemplary embodiments of which are shown in transversal section in Figs. 19 and 20.The gripping assembly 7 of Fig. 19 is essentially equal to that described in relation to Figs. 16A and 16B or Figs. 17A and 17B and includes a plate 304 similar to that described above, but which additionally incorporates a plurality of second retractable transversal pointed elements 327 arranged to project from one side of its contour in a plane substantially perpendicular to the first pointed elements 306 in order to laterally penetrate one of the objects P in order to hold and retain it by piercing. An extension plate 332 is set parallel to said side of the plate 304 and has apertures 333 through which said second pointed elements 327 pass. This extension plate 332 is connected to driving means 329 in the form of small fluid-dynamic cylinders, arranged to move the extension plate 332, in order to release said previously held object P. In Fig. 19, the second pointed elements are shown extended.

The plate 304 of the gripping assembly 7 is associated with driving means to extend and retract said second pointed elements 327. In the example shown in Fig. 19, each of the second pointed elements 327 is mounted on the stem of a small fluid-dynamic cylinder 328, although equally, all the pointed elements 327 could be secured to a support (not shown) that can be moved with respect to the plate 304 and joined to driving means. The second pointed elements 327 can be arranged to project from the plate 304 in different directions substantially within said plane perpendicular to the pointed elements 306.

In the exemplary embodiment of Fig. 20, the second pointed elements 327 of the plate 304 for the gripping assembly 7 are fixed and project from at least one side of the plate 304 contour, parallel to each other and in a plane substantially perpendicular to the first pointed elements 306. The second pointed elements 327 are able to laterally penetrate into one of the objects P in order to hold and retain it by piercing. Here again, an extension plate 332 is included and connected to driving means 329.

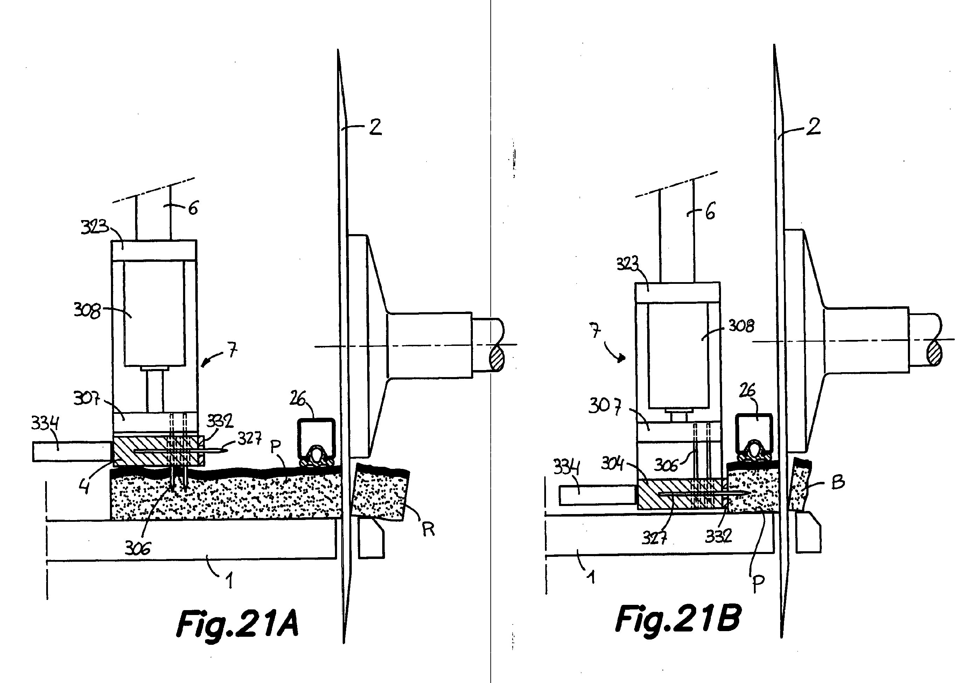

In Fig. 21A, a gripping assembly 7 is shown like the one described in Fig. 20, incorporated, for example, into the second handling device 6 and gripping an object P by means of the first pointed elements 306 in order to move it intermittently in relation to the cutting device 2. A holding bar 26 is operated to hold the object P is position against the processing support surface 1 next to the cutting device 2, while this cuts a slice R. Just as was described above, in order to perform the last cut, the second handling device 6 transfers what remains of the object P to the third handling device 8, this half turns the object P with respect to a shaft Q perpendicular to the support surface and the second handling device 6 grips the object P again and moves it forward up to the path of cutting device 2. Since what remains of the object P is too narrow to be gripped by the upper part, the same gripping assembly 7 holds it laterally by means of the second pointed elements 327, as shown in Fig. 21B, in order to cut a residual edge B. In addition to the extension plate 332 described above, the plate 304 is associated with at least one linear actuator 34 that can be driven to push the last slice of object P, taking it away from the extension plate 332 in order to allow it to drop over the edge of the second support surface 1b.

It must be pointed out here that the second handling device 6 could equally incorporate a portico with three movement shafts, X, Y, Z and a rotating shaft Q perpendicular to the support surface.

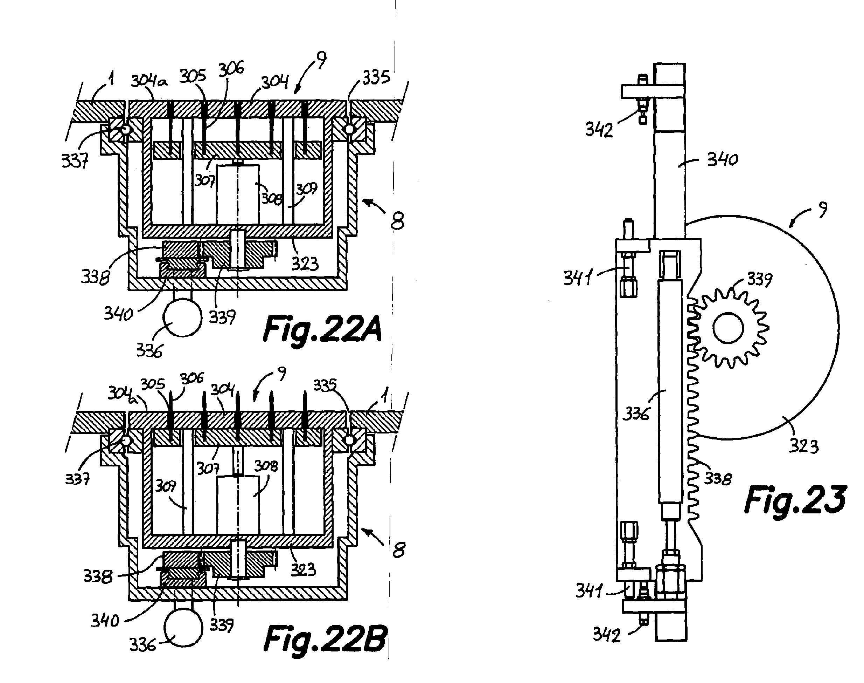

Figs. 22A-22B and 23 show the third handling device 8, which incorporates the gripping assembly 9 in accordance with another exemplary embodiment of the invention, in which at least the plate 304 is circular and is arranged to rotate in a circular aperture 335 of a support surface, such as the processing support surface 1, shown in Fig. 6, in relation to which the gripping assemblies 5, 7 of the first and second handling device 4, 6 also operate. The outer surface 304a of the plate 304 is level with said support surface 1b. In this gripping assembly 9, the plate 304 is solidly joined to a structure 323 located on the opposite side of the support 307 carrying the pointed elements 306 and the fluid-dynamic cylinder 308 is operationally connected by one end to the structure 323 and by the other to the support 307 in order to retract the pointed elements 306 (Fig. 22A) or extend them (Fig. 22B). In this case, the support element that cooperates in the gripping action by piercing is the plate 304 of the gripping element 2 of the first or second manipulator 4, 6 arranged in a suitable position. The movement of support 307 with respect to the plate 304 is guided by rectilinear guiding means 309 and the rotation of the gripping assembly 9 is guided by one or more bearings 337.

As better shown in Fig. 23, in order to rotate the gripping assembly 9 to a predetermined angle in said circular aperture 335 of the processing support surface 1, driving means 336 are incorporated consisting of, in accordance with the shown exemplary embodiment, a fluid-dynamic cylinder arranged to move a part with a rack 338 mating with a pinion 339 forming part of the structure 323. The part with the rack 338 is guided by means of a linear guide 340 and includes end-of-travel stops 341 the extension of which can be regulated to precisely adjust the angle rotated by the gripping assembly 9 in the circular aperture 335. The mentioned end-of-travel stops 341 include some corresponding end-of-travel switches. Preferably, there are dampers 342 installed in the end-of-travel positions.

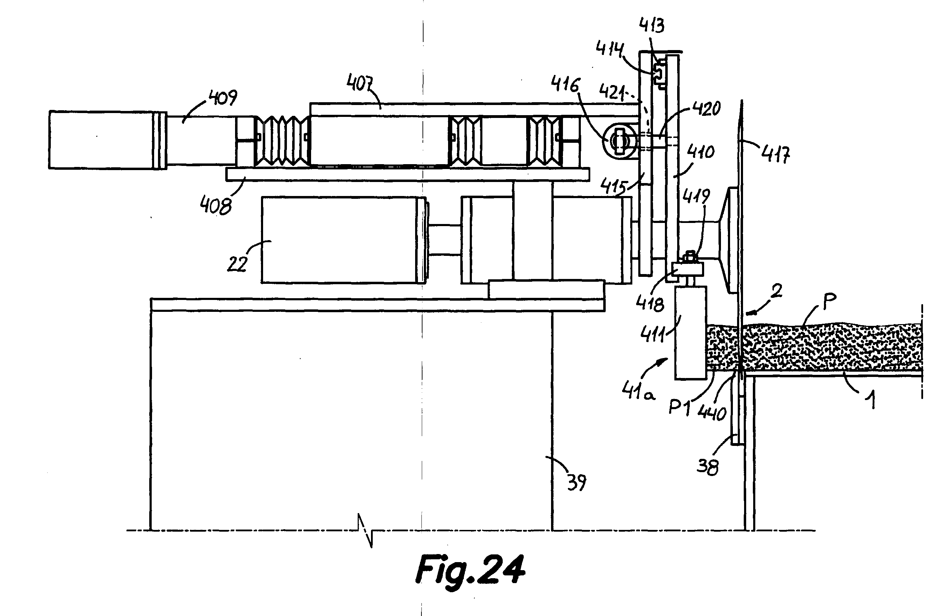

Referring to Fig. 24, a description is given below of the guide stop device included in the automatic cork slab slicing apparatus described above in relation to Fig. 6.The apparatus comprises a cutting device 2 in the form of a cutting disc 417, operationally arranged in relation to a support surface 1, or work bench, on which the cork slab P to be cut into slices is positioned.

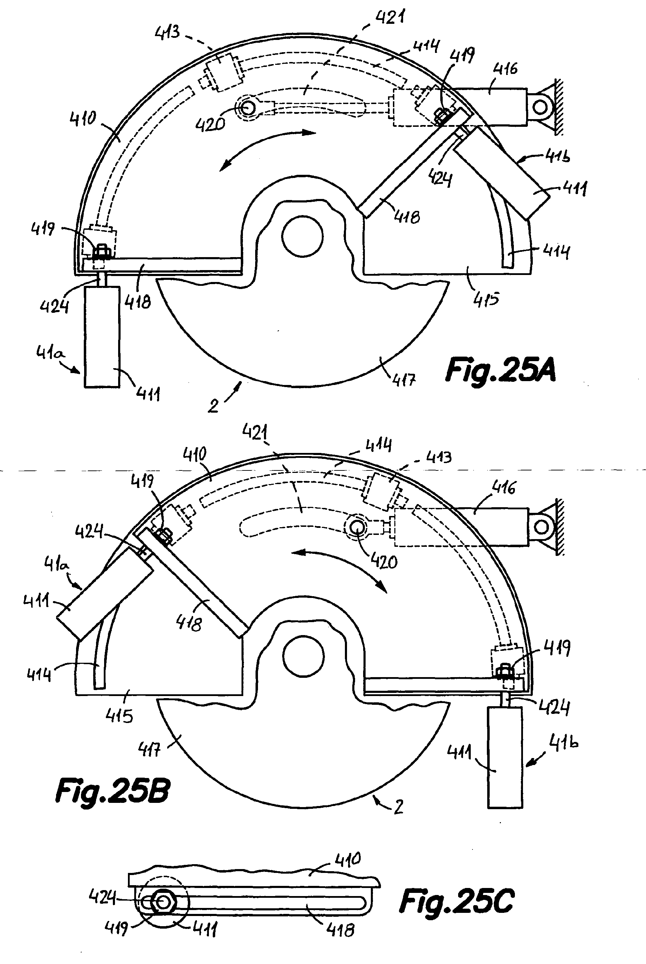

The exemplary embodiment shown in Fig. 24 and Figs. 25A-25C comprise guiding stop means 41a, 41b arranged in relation to the cutting device 2 in order to make rolling and/or sliding contact with one edge of a portion P1 of said slab P projecting by one side of the cutting device 2 opposite to the means of holding and drive, while the relative movement between the slab P and the cutting device 2 is produced in the direction of cutting. These guiding stop means 41a, 41b are mounted on a mobile support 407 coupled in a moveable fashion to a support structure 408 which has a fixed position with respect to the cutting device 2. For example, the support structure 408 is firmly joined to a bed 39 on which the cutting device 2 is installed. Driving means, which include, for example, a linear actuator 409, are connected to move the mobile support 407 with respect to the support structure 408. A management and control device is adapted to govern said driving means 409 in order to vary the position of the guiding stop means 41a, 41b in relation to the cutting device 2, in accordance with the magnitude of each movement of the slab P in the forward direction.

The mentioned means of holding and drive, immobilisation and movement (shown, for example, in Fig. 6) are similarly governed by said management and control device in a synchronised manner with the operation of said linear actuator 409 in order to obtain successive slices from the slab P of equal or different widths. In this way, the guiding stop means 41 a, 41b can adapt their position to a specific width that is different for each slice, as determined by the forward movement of the slab produced by the forward moving means in accordance with commands from the management and control device.

In the exemplary embodiment shown in Fig. 24, there is a support batten 38 set in a static manner between the cutting device 2 and the guiding stop means 41a, 41b. This support batten 38 has an upper surface coplanar with the support surface 1 in order to support the portion of slab P that projects from the support surface 1, before and during the cutting operation, together with a chamfer 440 to facilitate the falling of the cited object P under the force of gravity after being cut.

In the case where the cutting device 2 comprises a saw or disc blade fitted with a cutting disc 417 driven to rotate is a single direction defining a single leading edge which makes contact with the slab P during cutting, the guiding stop means are located on said leading edge of the cutting disc in a suitable position to make contact with the slab P just prior to where the cutting disc 417 makes contact with the slab P.

Alternatively, the invention also includes a modification to the guiding stop means 41a, 41b for those cases in which the cutting device 2 comprises a saw of disc blade fitted with a cutting disc 417 driven by a motor 22, which rotates in both directions, so that first and second leadings edges are defined that that alternately make contact with the slab P during cutting. For this reason, a driving motor 22 is connected and controlled to alternately invert the direction of rotation of said cutting disc 417 in accordance with successive cutting movements of said cork slab P in interference with the cutting disc 417, alternately in opposite directions and in a direction parallel to the plane of the cutting disc 417, interleaved with successive forward movements of the cork slab P in a direction perpendicular to the plane of the cutting disc 417.

Thus, with a double-action disc saw, the device comprises some first guiding stop means 41a associated with the first leading edge of the cutting disc 417 and some second guiding stop means 41b associated with said second leading edge of the cutting disc 417 and alternating means adapted to alternate between the positions of the first and second guiding stop means 41 a and 41b.

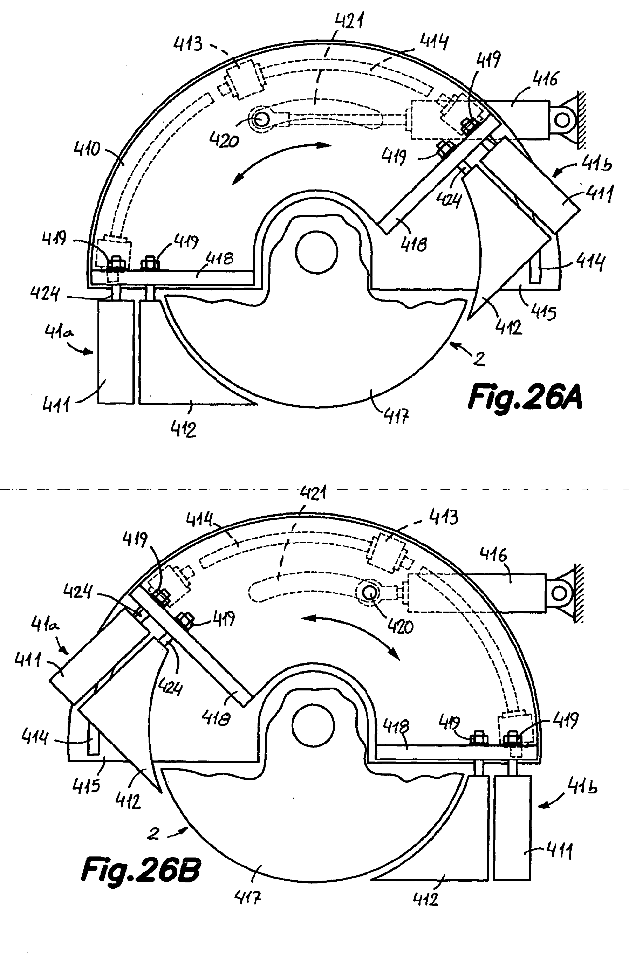

Figs. 25A-25B and 26A-26B show some exemplary embodiments where the guiding stop means 41a, 41b are installed on a tilting support 410. A tilting movement of the tilting support 410 allows the guiding stop means 41a, 41b to be alternately located in respective positions suitable for making contact with the slab P just prior to where the cutting disc 417 makes contact with the slab P on the corresponding leading edge. The tilting support 410, on which the first and second guiding stop means 41a and 41b are mounted, is coupled to said mobile support 407 so that it can pivot with respect to a an axis that is substantially coaxial with the cutting disc 417 rotation axis, with the tilting support 410 coupled to driving means 416 governed by the management and control device so that it alternately pivots between a first position (Figs. 25A and 26A), in which the first guiding stop means 41a are in an operational position on the first leading edge of the cutting disc 417, while the second guiding stop means 41b are outside the path of slab P, and a second position (Figs. 25B and 26B), in which the first guiding stop means 41a are outside the path of slab P, while the second guiding stop means 41b are in an operational position on the second leading edge of the cutting disc 417.

The tilting support 410 is coupled to the mobile support 407 by means of sliders 413 mounted so that they move along the length of one or more curved guides 414 incorporated into the support plate 415, which is fixed to the mobile support 407, where the mentioned curved guides 414 describe paths that are concentric with said pivot axis. The driving means 416 comprise, for example, a fluid-dynamic cylinder connected to a dowel 420 fixed to the tilting support 410 and passed through an elongated aperture 421 in said support plate 415.

It should be pointed out that, although the figures show the tilting support 410 is located above the cutting device 2 rotation axis, it could equally be mounted below the same in order to lower the centre of mass of the assembly comprising the cutting device and the guide stop device, which is favourable in those cases in which such an assembly is alternately moved in both directions in relation to the support surface 1 during the cutting operations, just as described below.

In practice, when the cutting device 2 motor 22 is switched on, with the guiding stop means in said first position, in other words, with the first guiding stop means 41a in the operational position (Figs. 25A and 26A), said cutting device 2 begins to rotate in a first rotational direction and the means of movement make a relative movement between the slab P and the cutting disc 417 in a first direction of cutting operation, so that the cutting disc 417 received the slab P by the first leading edge, where the first guiding stop means 41a are in the operational position. Once a slice P1 is cut, this will drop, aided by the chamfer 440 of the batten 38 into a slice collection element (not shown) associated with a classification device for the slices in accordance with their widths. The tilting support 410 then pivots towards said second position (Figs. 25B, 26B) in order to position the first guiding stop means 41a outside the path of the slab P on the first leading edge and the second guiding stop means 41b in an operational position on the second leading edge of the cutting disc. Then the linear actuator 409 linearly moves the mobile support 407 on which the stops 41a, 41b are mounted in order to change their position in relation to the cutting disc 417 in accordance with a desired width for the next slice to be cut. In concordance, the means of holding and drive that hold the slab P move the slab P in the forward direction towards the cutting device 2 with a magnitude in accordance with the desired width.

Then, the driving motor 22 drives the cutting disc 417 so that it rotates in the second direction of rotation and the means of movement produce a relative movement between the slab P and the cutting disc 417 in a second direction of cutting, so that the cutting disc 417 received the slab P by the second leading edge where the second guiding stop means 41b are located. This produces the cutting of the following slice with its associated desired width. After the second slice has been cut and has dropped for collection, the tilting support 410 again pivots towards the first position and recommences the cycle, although the forward movements of the slab P and the positioning of the means of stop 41a, 41b are modified to the various desired widths for each successive slice. These desired widths are controlled by the management and control device in accordance with parameters previously provided by, for example, recognition means of the cork slabs and optimisation of the cutting for improved yield.

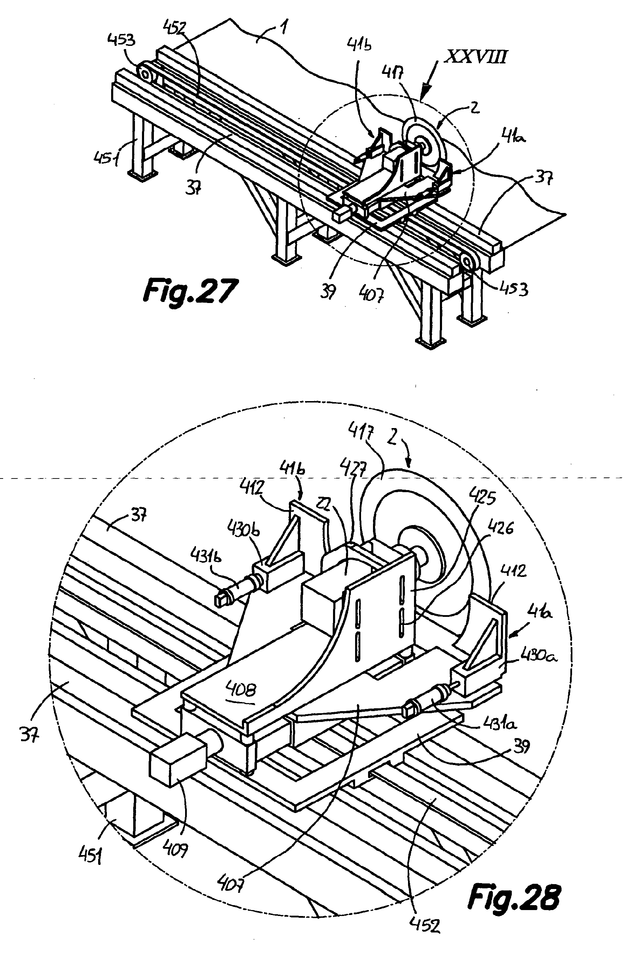

Figs. 27 and 28 show another exemplary embodiment of the device of this invention applied to a slicer with a double-action cutting disc, where said alternating means comprise first and second moveable supports 430a, 430b located on and the other sides of the cutting disc 417. The first and second guiding stop means 41a, 41b are mounted on said first and second moveable supports 430a, 430b respectively. The first and second moveable supports 430a, 430b are coupled to the mobile support 407 so that it can move in a direction parallel to the cutting disc 417 rotation shaft, and first and second driving means 431a, 431b are respectively coupled to the first and second moveable supports 430a, 430b to alternately move them between positions in which the first and second guiding stop means 41a, 41b are alternately located in said first and second positions. The mobile support 407 is, in turn, coupled in a moveable manner to a support structure 408 secured to a bed 39. Driving means 409 are arranged to move the mobile support 407 with the assembly of the first and second guiding stop means 41a, 41b. The mentioned first and second driving means 431a, 431b of the first and second guiding stop means 41a, 41b and the driving means 409 for the mobile support 407 are governed by the management and control device in accordance with predetermined parameters and in coordination with the means of holding and drive for the slab and the means of movement in order to obtain successive slices of various widths from a same slab of natural cork.

In the case in which the cutting device 2 is single-action, or the first and second guide stops 41a, 41b in a case where the cutting device 2 is double-action, the guiding stop means can take on various forms. For example, in accordance with the exemplary embodiment illustrated in Figs. 25A and 25B, the first and second guiding stop means 41a, 41b each comprise a roller 411, installed so that it can freely rotate with respect to an axis perpendicular to the direction of cutting and parallel to the cutting disc 417. In accordance with another exemplary embodiment shown in Figs. 26A and 26B, each of the first and second guiding stop means 41a, 41b incorporate a roller 411, as described above, and also a plate 412 with a sliding surface that has an edge that fits together with the periphery of the adjacent cutting disc 417. In the exemplary embodiment shown in Figs. 27, 28 and 30, the first and second guiding stop means 41a, 41b only incorporate a single plate 412 each. In accordance with other exemplary embodiments that are not illustrated in the drawings, the guiding stop means 41a, 41b only incorporate plates 412 in numbers of two or more on each side of the cutting disc 417, or only rollers 411, in numbers of two or more on each side of the cutting disc 417, or other combinations of rollers and plates in numbers other than those shown in the figures.

It is well known that, because of the highly abrasive nature or cork, the cutting disc 417 undergoes a reduction in diameter due to wear, The slicer machine may optionally include some first adjusting means adapted to vertically move the cutting device 2 in relation to the support surface 1 in order to compensate for the mentioned reduction in diameter of the cutting disc 417 due to wear. These first adjusting means are illustrated in the way of an example in Figs. 27 and 28, where a vertical plate 25 part of the support structure 408 incorporated elongated holes 426 that contain the securing screws for a motor 22 support 27, on the output shaft of which is installed the cutting disc 417. In this exemplary embodiment, the first and second guiding stop means 41a, 41b remain in a vertical position that is fixed in relation to the support surface 1, although, if desired, they could be installed to move in relation to the support surface 1, together with the cutting device 2.

The device of this invention may also include some second adjusting means adapted to move the first and second guiding stop means 41a, 41b in relation to the cutting device 2 in order to adjust its position with respect to the cutting disc 417 in order to compensate for said loss in diameter. These second adjusting means are illustrated in the way of an example in Figs. 25A to 25C, where first and second guides 418 are joined to the tilting support 410, on either side of the cutting device 2. Supports for the first and second guiding stop means 41 a, 41b are able to run along of the mentioned first and second guides 418, and releasable securing elements 419 that secure said supports for the first and second guiding stop means 41a, 41b to said first and second guides 418 respectively in desired positions. In the illustrated exemplary embodiments (see details in Fig. 25C), the mentioned first and second guides 418 include elongated slots containing the support shafts or stems 424 of the first and second guiding stop means 41 a, 41b, which are fixed in place with respect to the corresponding elongated slots using, for example, locknuts in worm cuts in said shafts or stems 424.

Fig. 29 shows a highly diagrammatic exemplary embodiment of the device of this invention similar to that described in relation to Figs. 27 and 28, applied to a slicer in which the means of holding and drive and the immobilising means of the slab P are jointly formed by a lower roller 29, which has a cylindrical working surface that is level with or slightly higher than the support surface 1 and faces cylindrical working surface of a pressure roller 30, located above the support surface 1. The cited pressure roller 30 can freely rotate and is installed so that it can be vertically moved and is connected to pressure means that is able to press the pressure roller against the lower roller 29, trapping the slab P between the two. A driving motor 442 is connected by means of a transmission belt or chain 443 to the mentioned lower roller 29 in order to cause it to rotate intermittently and thus produce the forward movements. In another patent application, ES 200402224 from the same applicant, such a holding and drive roller is described for a natural cork slab slicer. The roller device 29, 30 jointly performs the functions of the automatic immobilising means and the automatic forward moving means of the slab P, and can operate with only the cooperation of the first handling device 4 which, in this case, in addition to the functions of transfer and orientation also carries out those of slab P rotation. Evidently, the first handling device 4 and the roller device 29, 30 can transfer a slab P from one to the other. During operation, the first handling device 4 delivers the duly orientated slab P to the roller device 29, 30 in order to carry out the cutting of the rejected irregular rear edge, then the slab P is returned by the first handling device 4, which performs the half-turn operation and delivers it once again to the roller device 29, 30 in order to cut the rejected irregular front edge. From this point, the first handling device 4 is released and the roller device 29, 30 continues only to cut the slices from slab P in accordance with the cutting parameters.

The device in the exemplary embodiment of Fig. 29 comprises a support piece 445 arranged below the cutting device 2 and better illustrated with enlarged detail shown in Fig. 29. The mentioned support piece 445 is preferably fixed to the cutting device 2 support so that there is relative movement between the support piece 445 and the support surface 1. The support piece 445 presents an upper surface, coplanar with the support surface 1, which has a slot 446 suitable for receiving an inserted lower edge of the cutting disc 417 without any interference. The cited slot 446 divides said upper surface into front and rear portions 445a, 445b, arranged on either side of the cutting disc 417 in order to support part of object P which projects from the support surface 1, immediately before and during the cutting operation. The length of the upper surface may be longer than that of the slot 446 so that the front and rear portions 445a, 445b are joined at the ends of the upper surface. The use of this support piece 445 in place of the batten 38 as shown in Fig. 24, is especially suitable in combination with the pair of rollers 29, 30, due to the fact that the curvature of the cylindrical working surface of the lower roller 29 prevents the support surface 1 covers a small space between the lower roller 29 and the cutting disc 417, which is suitably occupied by the corresponding front portion 445a of the support piece 445.

Alternatively, Fig. 30 shows a guide stop device similar to that described above in relation to Figs. 27 and 28, where a support band 455 is arranged between the working plane of the guiding stop means 41 a, 41b and the cutting disc plane 417 and which is mounted on rollers 456, at least one of which is motorised. The mentioned rolling support band 455 has an upper section 457 coplanar with the support surface 1, which provides support for the part of object P that projects from the support surface 1 before and during the cutting operation. Driving means are connected to make the mentioned roller, of said rollers 456, motorised in order to move said upper section 457 in one or the other directions to facilitate the expulsion of object P after cutting. Preferably, the upper section 457 slides over a support device that prevents it from giving way under the pressure of the projecting portion of the slab P.

There are two main alternative configurations for slicing machines of the described type and the device of this invention can be applied to either of them. For example, in accordance with one of the configurations, a bed 39, on which the cutting disc 417 is mounted, is in a static position, while the support surface 1 and the means of holding and drive are installed in a mobile manner and guided in relation to the cutting disc 417 and associated with the means of movement in order to perform rocking movements in relation to the cutting disc 417 in the direction of cutting.

In accordance with another of said configurations, such as the one shown in Fig. 27, the bed 39 on which the cutting disc 417 is mounted, is installed in a mobile fashion on guides 37 that are fixed with respect to a base structure 451 that supports the support surface 1. The device comprises means of movement that include, for example, a toothed belt 452 mounted on pulleys 453, at least one of which is coupled to a motor (not shown), with said toothed belt 452 connected to said bed 39. These means of movement are governed to carry out the movements of the cutting disc 417 in a relation of interference with the slab P in the direction of cutting. Various means of holding and drive may be arranged on the support surface 1, so that the cutting disc 417 can cut several slabs P with each pass in the direction of cutting. Eventually, the means of holding and drive can be integrated into a manipulator (not shown) associated with the bench 1 and driven and governed to carry out the movements of the slab P in relation to the cutting disc 417 in the direction of forward movement.

It must be understood that the embodiments here described are for illustrative purposes only and those skilled in the art would be able to various modifications or changes without leaving the scope of the invention as defined in the attached claims.

The apparatus described here is adequate for implementing the management and control procedure in accordance with this invention for handling and cutting rough natural cork slabs with irregular shapes, sizes and contours.

First, the procedure of this invention consists in obtaining exploration parameters that are characteristic of a specific slab P, with said exploration parameters including at least the size and contour of said slab P. Then, using said exploration parameters with the intervention of electronic means 18 to determine processing parameters referring to the position and orientation of the first cut to be made in the slab P, together with successive cuts to be made in the slab P with reference to the position and orientation of said first cut. These processing parameters are judged to be optimum by the electronic means 18 for better production form the slab using said exploration parameters. Finally, the procedure comprises governing said automatic handling and processing apparatus by means of control commands generated by said electronic means 18 in accordance with said processing parameters in order to automatically carry out the mentioned first and second cuts.

In an exemplary embodiment, the step of obtaining the exploration parameters comprises employing some exploration means 103 to capture the slab P arranged on an exploration support surface 101 in order to generate data that is representative of said exploration data, which include at least the size and contour of the slab P, together with its position and orientation on said exploration support surface 101. The step to determine the position and orientation of the first cut comprises using said indication means 106 to generate data representative of at least one mark 115 associated with the slab P, which is indicative of the position and orientation of the first cut to be made in the slab P. The step to determine the processing parameters comprise carrying out the mentioned processing of the data representative of the exploration parameters, together with the processing of said data representative of said mark 115, of which there is at least one. These processing parameters include at least the orientation, position and number of cuts to perform on the slab P taking mark 115 as reference.

In some applications, the management and control device can also make use of additional parameters held in a memory or entered by an operator to determine the processing parameters. These additional parameters may include, for example, one or more predetermined slice widths.

The step of generating said data representative of the mark 115 associated with the slab P comprises tracing the mark 115 on the slab P by means of a marker 109 capable of entering representative parameters of the mark 115 position on the slab P into the electronic means 18 at a selected time. Alternatively, the step of generating said data representative of the mark 115 comprises virtually entering said mark 155 over an image of the slab P and/or of the exploration parameters obtained by the exploration means 103 shown on a display device 113 connected to said electronic means 18.

The step of determining said processing parameters comprises determining at least the orientation, position and the number of cuts to be made in the slab P in accordance with at least one reference determined by analysis of the exploration parameters carried out by the electronic means 18 using software held in memory. The step of automatically carrying out said first and successive cuts comprises recognising the slab P set in a random position on the recognition support surface 1a by recognition means connected to the electronic means 18 from the exploration parameters and to grip the slab P on the recognition support surface 1a by the manipulation means 4 governed by the electronic means 18 and to orientate, transfer and perform relative movements between the object P and a cutting device 2 in mutual interference in accordance with the processing parameters.

The step of moving the slab P in interference with said cutting device 2 comprises carrying out a first cut in order to reject a first irregular edge of the slab P, subsequent cuts parallel to said first cut in order to obtain successive slices from said slab P and then rotate the slab P half a turn and move it again in interference with the cutting device 2 in order to perform at least one final cut parallel to the first cut in order to reject a second irregular edge from the slab P opposite the first and to obtain the last slice. In this way, the step of determining said processing parameters comprises also determining the orientation of said first cut, a distribution of the positions of the subsequent parallel cuts in accordance with one of more predetermined slice widths and the moment when to carry out the half turn operation.

## Claims

1. A system for handling and treating natural cork slabs by means of an automatic apparatus, the system comprising a management and control device including:
exploration means (103) to capture an irregular slab (P) and generate data that is representative of exploration parameters that include at least the contour of said slab (P); and
electronic means (18) adapted to perform the processing of said data representative of said exploration parameters in order to determine processing parameters that include at least the orientation and/or position of at least one operation to be carried out on the slab (P) judged to be optimum for better yield from the slab (P),
said electronic means (18) being adapted to generate control commands to govern said automatic handling and processing apparatus in accordance with said processing parameters.

2. The system in accordance with claim 1, **characterised in that** said exploration means (103) are arranged to capture the slab (P) within an exploration area (1) and adapted to also include in said exploration parameters the position and orientation of the slab (P) in relation to said exploration area (1).

3. The system in accordance with claim 2, **characterised in that** said exploration means (103) are adapted to also include in the exploration parameters a detailed image of a surface area of the slab (P) and/or an image of the surface texture of the slab (P) to be used as a specific distinguishing mark for the slab (P) and/or for identification of possible defects in a specific slab (P).

4. A system in accordance with any of the previous claims, **characterised in that** it also comprises indication means (106) able to be used for generating data representative of at least one mark (115) associated with the slab (P) that indicates the position and orientation of the first operation to be performed on the slab (P), said electronic means (18) being adapted to carry out said processing of the data representative of the exploration parameters together with the processing of said data representative of said at least one mark (115) in order to determine said processing parameters as a result, including at least the orientation, position and number of subsequent processing operations to be performed on the slab (P) with reference to the mark (115).

5. The system in accordance with claim 4, **characterised in that** said indication means (106) comprise at least a reference indication (107) that is fixed with respect to the exploration area (1) in order to assist in the manual positioning of the slab (P) in a selected orientation within the exploration area (1), and a marker (109) adapted to trace the mark (115), said marker (109) being mounted on a mobile support (110) adapted to be moved in relation to the exploration area (1) in order to locate the mark (115) in a desired position on the slab (P) located in said selected orientation within said exploration area (1) including position-detection means to detect the position of the mobile support (110) in relation to the exploration area (1), said position-detection means being connected to said electronic means (18) and associated with a control (112) adapted to enter representative parameters of the mark (115) position on the slab (P) into the electronic means (18) when said control (112) is operated, and **in that** it comprises at least one display device (113) connected to said electronic means (18) to display an image of the slab (P) and/or the exploration parameters obtained by the exploration means (103) and/or of the mark (115) introduced by the position-detection means.

6. The system in accordance with claim 4, **characterised in that** said indication means (106) comprise a peripheral device connected to the electronic means (18) in order to virtually introduce said mark (115) onto an image of the slab (P) and/or of the exploration parameters obtained by the exploration means (103) shown on a display device (113) connected to said electronic means (818).

7. The system in accordance with claims 1 to 6, **characterised in that** said electronic means (18) are adapted to determine, from the analysis of the exploration parameters using software held in memory, at least initial coordinates corresponding to the position and orientation of a first operation to be performed on the slab (P) and subsequent coordinates corresponding to at least the orientation, position and number of subsequent operations to be performed on the slab (P) with reference to said initial coordinates and for including said initial and subsequent coordinates in said processing parameters.

8. The system in accordance with any of the claims 1 to 7, **characterised in that** said automatic handling and processing apparatus is a slicer for rough natural cork slabs (P), in which handling means are adapted to grip a slab (P) from the exploration area (1) or the recognition area (14), transfer it, orientate it and carry out relative movements between said slab (P) and a cutting device (2) in mutual interference in order to make a first cut to reject a first irregular edge of the slab (P) and subsequent cuts parallel to the first cut in order to obtain successive slices from said slab (P), and to rotate the slab (P) half a turn and move it again in interference with the cutting device (2) in order to make at least one cut parallel to the first cut to reject a second irregular edge of the slab (P) opposite the first one, said electronic means (18) being adapted to include in said processing parameters at least the orientation of said first cut, the number and distribution of the positions of the subsequent parallel cuts in accordance with one or more predetermined slice widths for a same slab (P), together with the moment when to carry out said half turn rotation.

9. The system in accordance with any of the claims 1 to 7, **characterised in that** said automatic handling and processing apparatus is a disc cutter from thin sheets (P) of natural cork, in which manipulation means are adapted to grip a sheet (P) from the exploration area (1) or recognition area (14), transfer it, orientate it and carry out relative movements between said sheet (P) and at least one disc-cutting device for mutual positioning, and cutting movements of said cutting device, in order to consecutively carry out a plurality of disc cuts in various locations on the sheet (P) selected to avoid any possible defects detected in the same, said electronic means (18) being adapted to include in said processing parameters at least the position of a first disc cut, together with the number and positions of subsequent disc cuts in accordance with the positions of possible defects in the sheet (P) obtained from an image of the surface texture of the sheet (P) included in the exploration parameters.

10. The system in accordance with claim 8, **characterised in that** said automatic handling and processing apparatus comprises:
at least one processing support surface (1), at least one cutting device (2), operationally arranged in relation to said processing support surface (1);
immobilising means (26) to intermittently immobilise the slab (P) with respect to the processing support surface (1);
cut moving means, in order to perform relative movements with interference between the slab (P) and the cutting device (2) in at least one direction of cut;
automatic forward moving means in order to carry out movements of said slab (P) in a forward direction or in the opposite direction.
guiding stop means (41, 41a, 41b) arranged at a distance from said cutting device (2), and automatic stop regulating means to vary the position of said guiding stop means (41, 41a, 41b) in relation to the cutting device (2) in accordance with the widths of the various slices to be cut from the slab (P); and
automatic rotating means to rotate the slab (P) with respect to an axis normal to the processing support surface (1) without interference with the cutting device (2) between two consecutive cutting operations,
where said management and control device is capable of governing said immobilising means, said automatic forward moving means, said cut moving means, said automatic stop regulating means and said automatic rotating means in a synchronised manner in accordance with said cutting parameters previously determined by the management and control device and associated with each specific slab (P) in order to automatically perform successive cutting operations on the same slab (P) in order to obtain successive slices of equal or different widths from the same.

11. The system in accordance with claim 10, **characterised in that** it comprises at least one recognition support surface (1a) on which the slab (P) is received, and transfer and orientating means adapted to take the slab (P) from said recognition support surface (1a), orient it and transfer it to the processing support surface (1) governed by the management and control device in accordance with said cutting parameters, and **in that** it includes recognition means (3) arranged to find and recognise the slab (P) in a random position on said recognition support surface (1a) from the previously determined exploration parameters and recover, from a memory, the cutting parameters associated with the specific slab (P), which are previously determined by said management and control device from said exploration parameters.

12. The system in accordance with claim 10, **characterised in that** it comprises at least one recognition support surface (1a) on which the slab (P) is received, and transfer and orientating means adapted to take the slab (P) from said recognition support surface (1a), orientate it and transfer it to the processing support surface (1) governed by the management and control device in accordance with said cutting parameters, and **in that** the management and control device comprises said exploration means (70) arranged to generate said exploration parameters referring to the location and the characteristics of the slab (P) in a random position on said recognition support surface (1a).

13. The system in accordance with claim 11 or 12, **characterised in that** it comprises a first handling device (4) carrying a first gripping assembly (5) including means for gripping and retaining at least one of the slabs (P) and means to release the previously gripped slab (P), said first handling device (4) comprising driving means adapted to move said first gripping assembly (5) in the three spatial directions (X, Y, Z), one of these spatial directions (Z) being normal to said processing support surface (1), and to rotate the first gripping assembly (5) with respect to a shaft (Q1) normal to the processing support surface (1), the first handling device (4) being governed by the management and control device to carry out, at least in part, one or more functions selected from a group comprising the functions of said transfer and orientating means, the functions of said automatic forward moving means and the functions of said automatic rotating means.

14. The system in accordance with claim 13, **characterised in that** it comprises at least one second handling device (6) carrying a second gripping assembly (7) which includes means for gripping and retaining at least one of the slabs (P) and means to release the previously gripped slab (P), with said second handling device (6) comprising driving means adapted to move said second gripping assembly (7) in a spatial direction (X) normal to a plane of cutting, or in said direction (X) and also in a spatial direction (Z) normal to the processing support surface (1), or in both directions (X, Z) and also to rotate the second gripping assembly (7) with respect to a shaft (Q2) normal to the processing support surface (1), the second handling device (6) being governed by the management and control device to carry out, at least in part, one or more functions selected from a group comprising the functions of said automatic forward moving means and the functions of said automatic rotating means, the first handling device (4) and the second handling device (6) being adapted to transfer the slab (P) from one to the other.

15. The system in accordance with claim 14, **characterised in that** it comprises at least one third handling device (8) carrying a third gripping assembly (9) which includes means for gripping and retaining at least one of the slabs (P) and means to release the previously gripped slab (P), said third handling device (8) comprising driving means adapted to rotate said third gripping assembly (9) with respect to a shaft (Q3) normal to the processing support surface (1), or to rotate the third gripping assembly (9) with respect to said shaft (Q3) and also move said third gripping assembly (9) in the direction (Z) normal to the processing support surface (1), the third handling device (8) being governed by the management and control device to carry out the functions of said automatic rotating means, the first handling device (4), the second handling device (6) and the third handling device (8) being adapted to transfer the slab (P) from one to the other.

16. The system in accordance with claim 13, **characterised in that** it includes a support and pressure roller device (29, 30) to jointly carry out the functions of said immobilising means and said automatic forward moving means for the slab (P), wherein a support roller (29) has a cylindrical working surface that is level with or slightly above the processing support surface (1) and facing a cylindrical working surface of a pressure roller (30), located above the processing support surface (1), wherein at least one of said support and pressure rollers (29, 30) is motorised and wherein the pressure roller (30) is mounted at its ends so that it can vary its inclination with respect to the processing support surface (1) in accordance with slab (P) thickness variations and can be pushed towards the support roller (29) by pressure means.

17. The system in accordance with claim 10, **characterised in that** said immobilising means comprise a securing bar (26) arranged adjacent to the cutting device (2) on the side of the same where the automatic forward moving means operate and coupled at its ends in a sliding manner to supports (227) which are hingingly connected to corresponding mobile supports (228) associated with driving means to independently move said mobile supports (228) in a direction (Z) normal to the processing support surface (1) in order to move said securing bar (26) moving it closer to the processing support surface (1) to trap the slab (P) and allowing the securing bat (26) inclination to adapt itself to the irregularities of the slab (P), or moving it away from processing support surface (1) in order to release the slab (P), said driving means comprising, for each of the mobile supports (228), at least one linear drive device that can be governed by the management and control device to move the securing bar (26) away to different heights over the processing support surface (1) in accordance with detection signals generated by detection means (246) arranged to detect the presence of the slab (P) for at least one height above the processing support surface (1).

18. The system in accordance with claim 10, **characterised in that** it comprises at least one incisive part (229) arranged in a static or rotating fashion in alignment with the cutting device (2) on the leading edge of the same, said incisive part (229) being mounted on a mobile support (230) coupled to a support structure that is fixed with respect to the cutting device (2), said mobile support (230) being connected to at least one resilient element (231) arranged to press said incisive part (229) over the slab (P) in order to cut a channel in the upper section of the slab (P) as it moves towards the cutting device (2) in order to reduce wear of the cutting device (2).

19. The system in accordance with claim 10, **characterised in that** it comprises conveying means (35) arranged in relation to the cutting device (2) to receive the obtained slices and irregular front and rear edges that are rejected from the slab, and driven to transport said slices and irregular front and rear edges from the slab (P) to a desired location, and **in that** it also includes classification means (36) associated with the conveying means (35) and governed by the management and control device in accordance with the cutting parameters in order to classify said slices according to their width and separate said irregular front and rear edges.

20. The system in accordance with claim 1 or 31, **characterised in that** the cutting device (2) comprises a cutting disc adapted to cut in both direction of rotation an coupled to a driving motor (22) controlled to alternately invert the direction of rotation of said cutting disc in accordance with the successive movement of the slab (P) in the forward direction, the automatic cut moving means being governed to perform the relative movements with interference between the at least one slab (P) and the cutting disc (2) alternately in opposite senses of the cutting direction in accordance with the changes in the direction of rotation of the cutting disc (2), and **in that** said automatic cut moving means comprise means to move the processing support surface (1) with the slab (P) fixed to the same in relation to the cutting device (2) arranged in a stationary position, or means to move the cutting device (2) in relation to the processing support surface (1) arranged in a stationary position with the slab (P) fixed to the same.

21. The system in accordance with claims 13, 14 and 15, **characterised in that** it comprises a gripping assembly (5, 7, 9) that includes means to penetrate at least one of the penetrable slabs (P) by means of at least one pointed element (306) in cooperation with at least one support element (1, 1a) in order to hold and retain said slab (P) by piercing, and means to release said previously gripped slab (P):

22. The system in accordance with claim 21, **characterised in that** said gripping assembly (5, 7, 9) comprises a plate (304) that has an outer surface (304a) facing or susceptible to face said at least one support element (1, 1a) with a plurality of pass-through holes (305) through said plate (304), a support (307) coupled in a mobile manner to the plate (304), and a plurality of corresponding pointed elements (306) coaxially arranged with said pass-through holes (305) and fixed to said support (307); and driving means (303, 308) arranged to perform extension movements that comprises a mutual approach of the support (307) and the plate (304) in a direction parallel to the axis of said pass-through holes (305) to cause said pointed element (306) to project from said outer surface (304a) of the plate (304) sufficiently to penetrate into one of said slabs (P) and hold it and retain it by piercing, and a retraction movement that comprises a mutual moving away of the support (307) and the plate (304) in said direction parallel to the axis of the pass-through holes (305) to cause said pointed elements (306) to retract behind the outer surface (304a) of the plate (304), thus releasing the previously gripped slab (P).

23. The system in accordance with claim 22, **characterised in that** the gripping assembly (5, 7, 9) comprises rectilinear guiding means (309) linking the plate (304) and the support (307) together ensuring linearity in the mentioned extension and retraction movements, and **in that** said driving means (308) comprise at least one fluid-dynamic cylinder (308) controlled by means of a valve system to produce the extension and retraction movements.

24. The system in accordance with claim 23, **characterised in that** the support (307) for the gripping assembly (5, 7, 9) is connected to an active element of said moving and/or rotating means (4, 6, 8), the fluid-dynamic cylinder (308) being operationally connected to the support (307) and the plate (304), and **in that** to the gripping assembly (5, 7, 9) comprises damping means arranged between the support (307) and the plate (304) to exert a retaining force on the plate (304) during the extension movement in order to create a crushing pressure on the slab (P) between the plate (304) and the support element (1, 1a).

25. The system in accordance with claim 23, **characterised in that** the plate (304) of the gripping assembly (5, 7, 9) is arranged on a first side of the support (307) and is solidly joined to a structure (323) located on a second opposite side of the support (307), with said structure (323) connected to an active element of said moving and/or rotating means (4, 6, 8), and with the fluid-dynamic cylinder (308) being operationally connected to the structure (323) and the support (307), and **in that**, during the extension movement, said valve system is adapted to be controlled in a free-exhaust mode in order to maintain the fluid-dynamic cylinder (308) inactive while the driving means of the moving and/or rotating means (4, 6, 8) push the gripping assembly (5, 7, 9) towards the support element to drive the extension movement by reaction of the slab (P) against the plate (304).

26. The system in accordance with claim 22, **characterised in that** the gripping assembly (5, 7, 9) includes detection means (315) adapted to produce an electrical signal indicating the presence or absence of an object next to plate (304), in order to determine whether or not one of said slabs (P) is held by the gripping assembly (5, 7, 9).

27. A system in accordance with claim 24 or 25, **characterised in that** the gripping assembly (5) includes a coupling port (317), and the handling device (4) includes a coupling terminal (316) configured and driven to be automatically connected to and disconnected from said coupling port (317) of the gripping assembly (5, 7, 9), and **in that** said coupling terminal (316) of the handling device (4, 6, 8) incorporates the fluid-dynamic cylinder (308) for driving the relative movements between the support (307) and the plate (304), an automatic coupling device (321) being mounted on an active end of the fluid-dynamic cylinder (308) and adapted to be coupled to and uncoupled from a static member (22) fixed to the plate (304) or the support (307).

28. The system in accordance with claim 22, **characterised in that** the plate (304) of the gripping assembly (7) includes a plurality of second pointed elements (327) projecting or susceptible to be projected by fluid-dynamic action from at least one side of its contour, in a plane that is substantially perpendicular to the first pointed elements (306), to laterally penetrate in one of the slabs (P) in order to subject it and retain it by piercing, and **in that** the gripping assembly (7) comprises at least one extension plate (332) arranged parallel to said side of the plate (304), said extension plate (332) having apertures (333) through which the second pointed elements (327) are passed, said extension plate (332) being connected to driving means (334) arranged to move the extension plate (332) in order to release the previously gripped slab (P).

29. The system in accordance with claim 22, **characterised in that** at least the plate (304) of the gripping assembly (9) is circular and arranged to rotate in a circular aperture (335) of the support surface (1), the outer surface (304a) of the plate (304) being level with said support surface (1), driving means (336) being connected to the gripping assembly (5, 7, 9) in order to make it rotate to a predetermined angle in said circular aperture (335) with respect to an axis perpendicular to the support surface (1).

30. The system in accordance with claim 10, **characterised in that** said guiding stop means (41a, 41b) are mounted on a mobile support (407) coupled in a mobile manner to a support structure (408), driving means (409) being arranged to move said mobile support (407) under commands from the management and control device to vary the position of the guiding stop means (41a, 41b) in relation to the cutting device (2) in accordance with desired variable widths for successive slices from a same slab (P), a distance between said guiding stop means (41a, 41b) and the cutting device (2) corresponding to the width of a slice to be cut from the slab (P).

31. The system in accordance with claim 30, **characterised in that** the cutting device (2) comprises a saw or disc blade fitted with a cutting disc (417) driven to rotate is a single direction defining a single leading edge which makes contact with the slab (P) during cutting, the guiding stop means being located on said leading edge of the cutting disc (417) in a suitable position to make contact with the slab (P) just prior to where the cutting disc (417) makes contact with the slab (P).

32. The system in accordance with claim 30, **characterised in that** the cutting device comprises a saw or disc blade fitted with a cutting disc (417) adapted to cut in both directions of rotation defining first and second leading edges which make contact with the slab (P) during cutting, and a driving motor (22) connected and controlled to alternately invert the direction of rotation of said cutting disc (417) in accordance with successive cutting movements of said cork slab (P) in interference with the cutting disc (417) alternately in opposite senses of a direction parallel to the plane of the cutting disc (417), and **in that** the guiding stop means (41a, 41b) comprise first guiding stop means (41a) associated with said first leading edge of the cutting disc (417) and second guiding stop means (41b) associated with said second leading edge of the cutting disc (417), said first and second guiding stop means (41a, 41b) being susceptible to be placed in respective positions suitable for making contact with the slab (P) just prior to where the cutting disc (417) comes into contact with the slab (P).

33. The system in accordance with claim 32, **characterised in that** it includes alternating means coupled to the first and second guiding stop means (41a, 41b) and governed by the management and control device to alternate the first and second guiding stop means (41a, 41b) between a first position, in which the first guiding stop means (41a) are in an operational situation at the first leading edge of the cutting disc (417) while the second guiding stop means (41b) are outside the path of the slice cut from the slab (P), and a second position in which the first guiding stop means (41a) are outside the path of the slice cut from the slab (P) while the second guiding stop means (41b) are in an operational situation at the second leading edge of the cutting disc (417).

34. The system in accordance with claim 33, **characterised in that** it comprises first adjusting means (426) adapted to vary the vertical position of the cutting device (2) in relation to the support surface (1) in order to compensate a reduction in cutting disc (417) diameter due to wear, and second adjusting means (418, 419) adapted to vary the position of the first and second guiding stop means (41a, 41b) in relation to the mobile support (407) in a direction perpendicular to the cutting disc (417) shaft in order to adjust its position with respect to a vertical plane that includes the cutting disc (417) shaft.

35. The system in accordance with any of the claims 10 to 34, **characterised in that** it includes a support piece (445) arranged in a static manner below the cutting device (2), said support piece (445) having an upper surface coplanar with the support surface (1) in which there is a slot (446) into which the cutting device (2) is inserted and which divides said upper surface into front and rear portions (445a, 445b) arranged to support, on both sides of the cutting device (2), the part of the slab (P) that projects beyond the support surface (1) before and during the cutting operation.

36. The system in accordance with any of the claims 10 to 34, **characterised in that** it comprises a support band (455) mounted on rollers (456) and arranged between the cutting device (2) and the guiding stop means (41a, 41b), said rolling support band (455) having an upper section (457) coplanar with the support surface (1) in order to support the part of the slab (P) that projects beyond the support surface (1) before and during cutting, and driving means to rotate at least one of said rollers (456) in order to move said upper section (457) in one or the other direction to facilitate the expulsion of slab (P) after cutting.

37. A procedure for handling and processing natural cork slabs by means of an automatic apparatus applied to the slicing of slabs (P) of natural cork, which includes the steps of:
exploring an irregular slab (P) within an exploration area (101) by exploration means (103) in order to obtain exploration parameters that are characteristic of that specific slab (P), these exploration parameters including at least the contour of the slab (P) and the position and orientation of the slab (P) in relation to said exploration area (101);
determining, from said exploration parameters, and with the intervention of electronic means (18), processing parameters that include at least the orientation of a first cut, the number and distribution of subsequent cuts parallel to said first cut in accordance with one or more predetermined slice widths for a same slab (P), and the moment to perform a half-turn rotation between two consecutive cutting operations; y
generating control commands by means of said electronic means (18) to govern said automatic handling and processing apparatus for handling and processing slabs (P) in accordance with said processing parameters.
